(19) **Europäisches Patentamt / European Patent Office / Office européen des brevets**

(11) **EP 4 667 714 A1**

(12) **EUROPEAN PATENT APPLICATION**

(43) Date of publication:
**24.12.2025 Bulletin 2025/52**

(21) Application number: **25181465.3**

(22) Date of filing: **06.06.2025**

(51) International Patent Classification (IPC):
**F01M 1/02** (2006.01)   **F01M 1/16** (2006.01)
**F01M 1/20** (2006.01)

(52) Cooperative Patent Classification (CPC):
**F01M 1/16; F01M 1/02; F01M 1/20;** F16N 2230/00;
F16N 2250/04; F16N 2260/08; F16N 2270/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.06.2024 US 202418745799**

(71) Applicant: **PRATT & WHITNEY CANADA CORP.**
**Longueuil, Québec J4G 1A1 (CA)**

(72) Inventors:
• **ABEDINPOUR FALLAH, Mehdi**
  **Longueuil (CA)**
• **KRZYWON, Jagoda**
  **Longueuil (CA)**

(74) Representative: **Dehns**
**10 Old Bailey**
**London EC4M 7NG (GB)**

(54) **A FUZZY LOGIC-BASED AI SYSTEM FOR DETECTION AND ACCOMMODATION OF OIL SYSTEM FAILURES IN THE AIRCRAFT'S PROPULSION SYSTEM**

(57) A method for detection and accommodation of oil system failures in the aircraft's propulsion system, using a fuzzy logic-based AI system (FLS), includes identifying, by the FLS, a target oil pressure value (OPV). The method includes receiving, by the FLS, a measured OPV from a sensor associated with the oil system. The method includes generating, by the FLS, a numerical command based on the measured OPV, a linguistic variable, membership functions for each linguistic term within a set of linguistic terms for the linguistic variable, and a set of rules defined in part by the target OPV. The method includes converting, by a controller, the numerical command to a linguistic command from among a set of linguistic commands mapped to a set of control signals, respectively. The method includes outputting, by the controller, to an actuator in the oil system, a control signal mapped to the linguistic command.

FIG. 1

## Description

TECHNICAL FIELD

This disclosure relates generally to oil pressure control in oil systems. More specifically, this disclosure relates to a fuzzy logic-based artificial intelligence (AI) system for detection and accommodation of oil system failures in the aircraft's propulsion system.

BACKGROUND

Fuzzy logic is an artificial intelligence (AI) method which has strong capability of handling uncertainty. A fuzzy logic system (FLS) nonlinearly maps an input data set to a scalar output data. The FLS includes a fuzzifier, rules, inference engine, and defuzzifier. The fuzzifier receives a crisp set of input data, and converts the received input data into a fuzzy input set using fuzzy linguistic variables, fuzzy linguistic terms and membership functions. This conversion is referred to as fuzzification. The inference engine generates a fuzzy output set (also referred to as an "inference") by applying a set of rules to the fuzzy input set. The defuzzifier converts the fuzzy output set into a scalar output data (referred to as "crisp output") using the membership functions.

SUMMARY

This disclosure relates to a fuzzy logic-based artificial intelligence (AI) system for detection and accommodation of oil system failures in the aircraft's propulsion system.

In a first aspect, a method for detection and accommodation of oil system failures in the aircraft's propulsion system, using a fuzzy logic-based AI system (FLS), is provided. The method includes identifying, by the FLS, a target oil pressure value. The method includes receiving, by the FLS, a measured oil pressure value from a sensor associated with an engine oil system. The method includes generating, by the FLS, a numerical command based on the received measured oil pressure value, a linguistic variable, membership functions for each linguistic term within a set of linguistic terms for the linguistic variable, and a set of rules defined in part by the target oil pressure value. The method includes converting, by a controller, the numerical command to a linguistic command from among a set of linguistic commands mapped to a set of control signals, respectively. The method includes outputting, by the controller, to an actuator in the engine oil system, a control signal mapped to the linguistic command.

In a second aspect, an electronic device includes a fuzzy logic-based AI system (FLS) for detection and accommodation of oil system failures in the aircraft's propulsion system. The electronic device includes a processor that includes a fuzzy logic system (FLS) configured to identify a target oil pressure value. The FLS is configured to receive a measured oil pressure value from a sensor associated with an engine oil system. The FLS is configured to generate a numerical command based on the received measured oil pressure value, a linguistic variable, membership functions for each linguistic term within a set of linguistic terms for the linguistic variable, and a set of rules defined in part by the target oil pressure value. The electronic device includes a controller configured to convert the numerical command to a linguistic command from among a set of linguistic commands mapped to a set of control signals, respectively. The controller is configured to output, to an actuator in the engine oil system, a control signal mapped to the linguistic command.

In a third aspect, a system includes a processor that includes a fuzzy logic system (FLS) configured to identify a target oil pressure value. The FLS is configured to receive a measured oil pressure value from a sensor associated with an engine oil system. The FLS is configured to generate a numerical command based on the received measured oil pressure value, a linguistic variable, membership functions for each linguistic term within a set of linguistic terms for the linguistic variable, and a set of rules defined in part by the target oil pressure value. The system includes a controller configured to convert the numerical command to a linguistic command from among a set of linguistic commands mapped to a set of control signals, respectively. The set of linguistic commands is mapped to a set of types of change to oil pressure in the engine oil system, respectively. The set of types of change to oil pressure includes no-change, increase, and decrease. The controller is configured to output, to an actuator in the engine oil system, a control signal mapped to the linguistic command. The control signal is configured to cause the actuator to perform a function that causes the type of change to oil pressure mapped to the linguistic command.

Any single one or any combination of the following features may be used with any of the above aspects. The set of linguistic commands may be mapped to a set of types of change to oil pressure in the engine oil system, respectively; the set of types of change to oil pressure may include no-change, increase, and decrease; and the control signal may be configured to cause the actuator to perform a function that causes the type of change to oil pressure mapped to the linguistic command. The processor may further be configured to determine whether an expected condition is satisfied by the control signal outputted to the actuator, the expected condition defined by: a measured difference between the measured oil pressure value and a subsequently measured oil pressure value received from the sensor within a specified time period; an incremental difference expected within the specified time period, based on the type of change to oil pressure mapped to the linguistic command; and a determination that the measured difference is within an expected range of the incremental difference expected. The processor may further be configured to determine whether to modify the linguistic command based on a determination result of whether the expected condition is satisfied. To identify the target oil pressure value, the processor may be configured to: receive the target oil pressure value as an input to the FLS; or identify the target oil pressure value among a set of operating parameters stored in a memory. The processor may further be configured to output the numerical command to a human-machine interface (HMI) configured to output at least one of: an indicator of an oil pressure warning, or guidance information corresponding to oil pressure condition, wherein the guidance information includes at least one of: a warning messages, immediate actions, subsequent actions that follow the immediate actions, or monitored parameters of the immediate action being successful. The sensor associated with an engine oil system may include multiple sensors. To receive the measured oil pressure value, the processor may be configured to: receive a first measured oil pressure value and a second measured oil pressure value sensor from a first sensor and a second sensor among the multiple sensors, respectively. The processor may further be configured to: analyze the first measured oil pressure value and the second measured oil pressure value to detect corrupted sensor data; and modify the received measured oil pressure value by removing the first measured oil pressure value, in response to a result of the analysis indicating the corrupted sensor data detected within the first measured oil pressure value and the first sensor failed. To generate the numerical command based on the received measured oil pressure value, the processor may be configured to: generate the numerical command based on the modified oil pressure value. To receive the measured oil pressure value, the FLS may be configured to receive a third measured oil pressure value from a third sensor among the multiple sensors. The processor may further be configured to: modify the received measured oil pressure value by removing the second measured oil pressure value, in response to the result of the analysis indicating the corrupted sensor data detected within the second measured oil pressure value and the second sensor failed. To generate the numerical command based on the modified oil pressure value, the FLS may be configured to generate the numerical command based on the third measured oil pressure value, in response to the result of the analysis indicating the corrupted sensor data detected within the first and the second measured oil pressure values.

Other technical features may be readily apparent to one skilled in the art from the following figures, descriptions, and claims.

BRIEF DESCRIPTION OF THE DRAWINGS

For a more complete understanding of this disclosure and its advantages, reference is now made to the following, non-limiting, detailed description taken in conjunction with the accompanying drawings, which are provided by way of example only and in which like reference numerals represent like parts:

FIG. 1 illustrates an example an engine oil pressure control system that includes an example fuzzy logic-based system (FLS) to control an oil pump controller;
FIG. 2 illustrates an example process within the FLS of FIG. 1;
FIG. 3 illustrates example membership functions allocating an input of measured oil pressure value to an oil pressure condition within the engine oil system;
FIG. 4 illustrates an example first set of rules for determining a command to be sent to the oil pressure controller;
FIG. 5 illustrates a first fuzzy matrix of commands to be sent to the oil pressure controller based on the first set of rules shown in FIG. 4;
FIG. 6 illustrates an example possible inference, which is output from the membership functions changing with the engine oil pressure changed in time;
FIG. 7 illustrates example acceptance criteria for the FLS to determine whether engine oil pressure is in an acceptable range, such that continued monitoring with "No Required Action" is needed;
FIG. 8 illustrates example rejection criteria for the FLS to determine whether engine oil pressure is in an unacceptable range;
FIG. 9 illustrates an example set of rules for outputting visual information to an HMI visible to crewmembers of an aircraft in a case in which the FLS has determined the oil pressure condition based on the first Fuzzy matrix of FIG. 5, but does not receive a confirmed pre-determined input;
FIG. 10 illustrates an example second set of rules for determining oil pressure condition in case two inputs to FLS are consistent;
FIG. 11 illustrates an example second fuzzy matrix of determined oil pressure conditions based on the second set of rules shown in FIG. 10;
FIG. 12 illustrates an example third set of rules for determining oil pressure conditions based on three inputs of engine oil pressure;
FIG. 13 illustrates an example third fuzzy matrix of determined oil pressure conditions based on the third set of rules shown in FIG. 12, and, and HMI indications for each determined oil pressure condition;
FIG. 14 illustrates an example fourth set of rules for determining oil pressure conditions based on three inputs of engine oil pressure, in a case in which the second and third inputs are consistent;
FIG. 15 illustrates an example fourth fuzzy matrix of determined oil pressure conditions and HMI indications for each determined oil pressure condition;
FIG. 16 illustrates an example fifth fuzzy matrix of determined immediate guidance corresponding to oil pressure conditions, for a case in which the HMI is configured to convey guidance information;

FIG. 17 illustrates an example fifth set of fuzzy rules for determining FLS guidance to announce verbally or visually via an HMI, in accordance with the fifth fuzzy matrix shown in FIG. 16;

FIG. 18 illustrates an example sixth fuzzy matrix of determining the subsequent guidance corresponding to oil pressure condition; and

FIG. 19 illustrates an example method for detection and accommodation of of oil system failures in the aircraft's propulsion system, using a fuzzy logic-based artificial intelligence (AI) system (FLS).

DETAILED DESCRIPTION

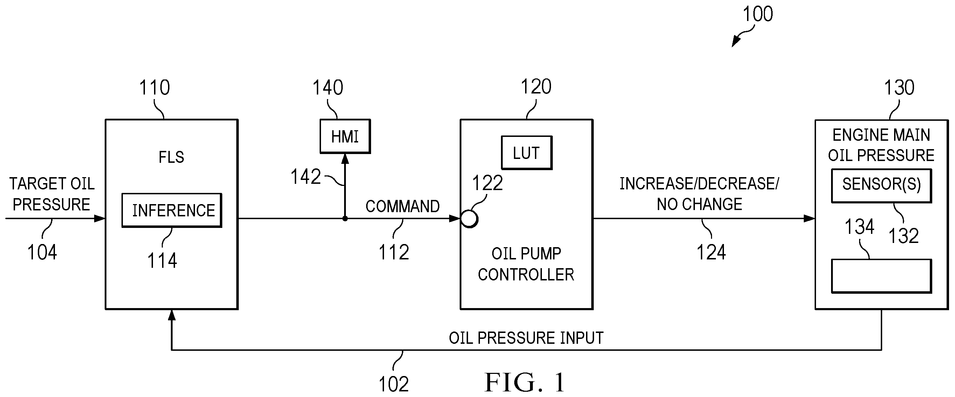

FIGS. 1 through 19, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As described above, fuzzy logic is an artificial intelligence (AI) method which has strong capability of handling uncertainty. A fuzzy logic system (FLS) nonlinearly maps an input data set to a scalar output data. The FLS includes a fuzzifier, rules, inference engine, and defuzzifier. The fuzzifier receives a crisp set of input data, and converts the received input data into a fuzzy input set using fuzzy linguistic variables, fuzzy linguistic terms and membership functions. This conversion is referred to as fuzzification. The inference engine generates a fuzzy output set (also referred to as an "inference") by applying a set of rules to the fuzzy input set. The defuzzifier converts the fuzzy output set into a scalar output data (referred to as "crisp output") using the membership functions.

The FLS performs a fuzzy logic algorithm, which can be summarized by the following seven steps, which are grouped into four stages: an Initialization Stage in which (1) linguistic variables and terms are defined, (2) membership functions are constructed, and (3) a rule base is constructed; a Fuzzification Stage in which (4) crisp input data is converted to fuzzy values using the membership functions; an Inference Stage in which (5) the rules in the rule base are evaluated and (6) the results of each rule are combined; and a Defuzzification Stage in which (7) the output data is converted to non-fuzzy values.

A fuzzy logic algorithm can receive inputs (such as intuition inputs in a linguistics representation) from a human expert and weigh the received inputs as part of an inference process before outputting a determination. In this way, the fuzzy logic algorithm can determine not only that an aircraft system is displaying anomalous behavior, but can also output how that anomalous behavior was determined, which features were involved, and what is the type of anomaly behavior. The ability to inject the intuition of a specialist in a linguistic representation allows an anomaly detection and accommodation algorithm according to embodiments of this disclosure to be created faster than with other artificial intelligence (AI) approaches.

FIG. 1 illustrates an engine oil pressure control system 100 that includes an example fuzzy logic-based system (FLS) 110 to control an oil pump controller ("controller") 120, according to embodiments of this disclosure.

The system 100 includes the controller 120, which can be part of engine electronic controller that includes computer processors and actuators 134 that output control signals to oil pumps, oil valves, and other working components within the engine main oil pressure line 130. The system 100 relates to an aircraft and interacts with aircraft subsystems including an aircraft main propulsion system, an engine control system, an engine oil system, engine mounted sensors, externals, avionics, and/or cockpit indications. As additional subsystems to the aircraft, the system 100 provides AI-implemented FLS 110 to provide identification of a current condition of the oil pressure and current state of the engine oil system. The system 100 further provides communication between the cockpit and the AI-implemented FLS 110.

The system 100 can be referred to as an oil pressure monitoring, and governing system controlled by a FLS. The system 100 adjusts the oil pressure of the engine main oil line 130 according to the current oil pressure value 102 measured of the engine main oil line 130 and the target oil pressure value 104.

The FLS 110 receives the current oil pressure value 102 measured by one or more sensors 132. For example, the sensors 132 can include first, second, and third sensors that concurrently measure first, second, and third oil pressure values, respectively. The measured oil pressure value 102 is sensor data that is feedback to the FLS 110 in the form of numerical values.

In some embodiments, the FLS 110 receives a pre-determined input 102 that includes the main engine OPV 102, and the FLS 110 does not perform making a determination of the engine oil pressure. Alternatively, in some embodiments, the FLS 110 receives inputs (such as first, second, and third measured OPVs) from multiple sources (e.g., multiple sensors 132) regarding the measured OPV of the main engine system 130, and based on the multiple received inputs, determines what the current measured engine OPV is (such as determining a modified OPV).

The FLS 110 identifies or receives the target oil pressure value 104. The target oil pressure value 104 can be engineering requirements set by (for example, received as input from) an owner of the aircraft as operating parameters that are based on physical limitations of the machinery. In some embodiments, the target oil pressure value 104 stored in a memory of the FLS 110 and set by a manufacturer of the engine main oil pressure system 130.

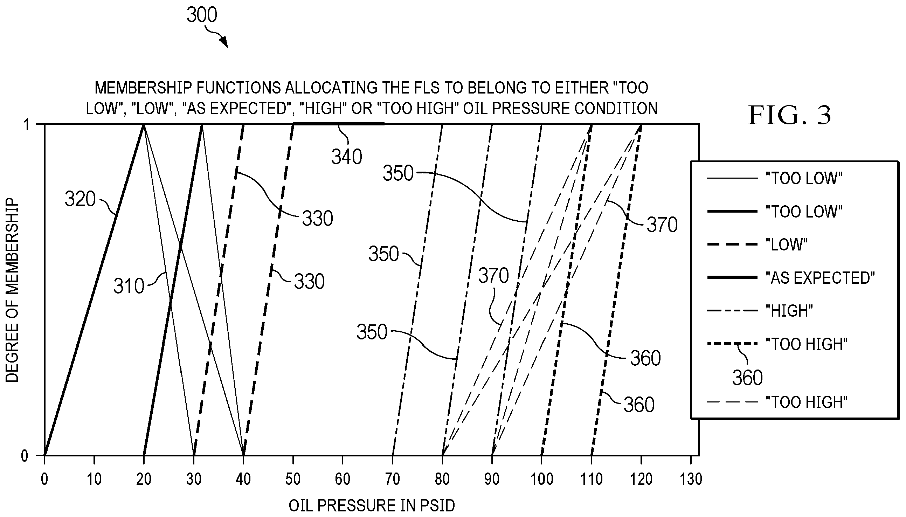

The FLS 110 executes a fuzzy logic system algorithm that can be defined as a nonlinear mapping of an input data set to a scalar output data. The FLS 110 generates a command 112, which is an example of scalar output data. As an intermediate step prior to generating the command 112, FLS 110 generates an inference 114, which is a value between 0 and 1 in the fuzzified-domain, and which denotes a degree of membership (such as a y-axis value of FIG. 3) for the measured OPV 102 input. The command 112 can be a numerical value that can be converted to a linguistic command. The FLS 110 sends the command 112 to an input interface 122 of the controller 120, which executes the command 112. A specified time period after the command 112 is output, the FLS 110 checks if the controller 120 completed execution of the command 112. If the FLS 110 determines, based on the target value 140 matching or being approximately equivalent to feedback of a subsequently measured oil pressure value 102, the controller 120 successfully caused the engine oil system 130 to come within an 'as expected' range, then, then execution of the command 112 is completed. Upon completion of the command 112, the FLS 110 will modify the command 112 to represent 'no change' command.

The FLS 110 continuously monitors or accesses information about parameters of the engine oil system 130 (for example, continuously receiving parameters recorded by sensors), determines the operating status of the oil system and current condition of the oil pressure value. That is, the FLS 110 uses the received parameters (including measured sensor data) to verify which of the programmed criteria are met by the parameters. The system 100 includes at least one processing device ("processor") configured to implement the machine learning capabilities for the AI-based FLS 110, and particularly to execute the functions of the FLS 110.

The FLS 110 can be configured (e.g., programmed) to store definitions of and criteria to identify conditions present in the engine oil system, the defined conditions including: Loss of oil pressure; Low oil pressure; High oil pressure; Fire due to oil leakage; and Maintained normal, expected oil pressure.

The FLS 110 periodically compares the measured OPV 102 and the target OPV 104 and generates a command 112 to increase or decrease oil pressure that is sent to the oil pump controller 120. The controller 120 is designed to receive commands ("decrease", "increase", "no change") from the FLS 110, and in response to the received command 112 execute either increasing or decreasing of oil pressure or the controller 120 does not do anything if the command 112 is "no change."

Properly defined operation of the oil pump controller 120 allows changing the oil pressure in increments at which when the FLS 110 determines the "as expected" condition is achieved, then FLS 110 changes the command 112 from "increase" or "decrease" to "no change." The 'no change' command is executed by the oil pump controlled 120 without entering a high oil pressure condition or low oil pressure condition, which are undesired conditions in which higher oil pressure than "as expected" or lower oil pressure than "as expected."

The FLS 110 defines incremental step changes in oil pressure in which the oil pressure controller 120 "increases" or "decreases" the oil pressure to allow the engine oil system's 130 OPV to achieve the "as expected range," precisely, smoothly and within time constraints of specified time periods.

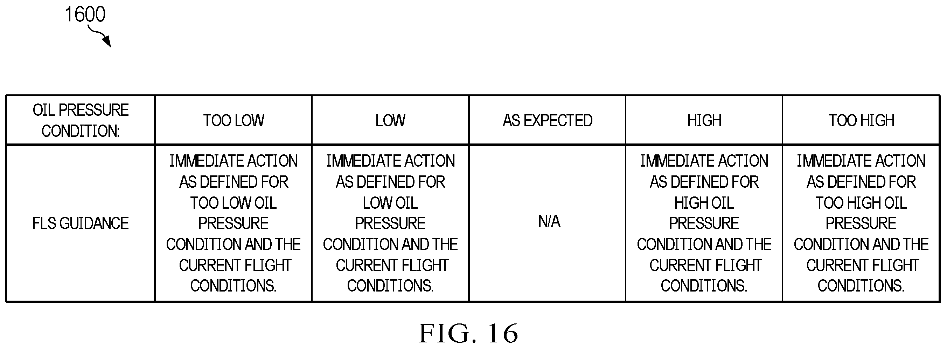

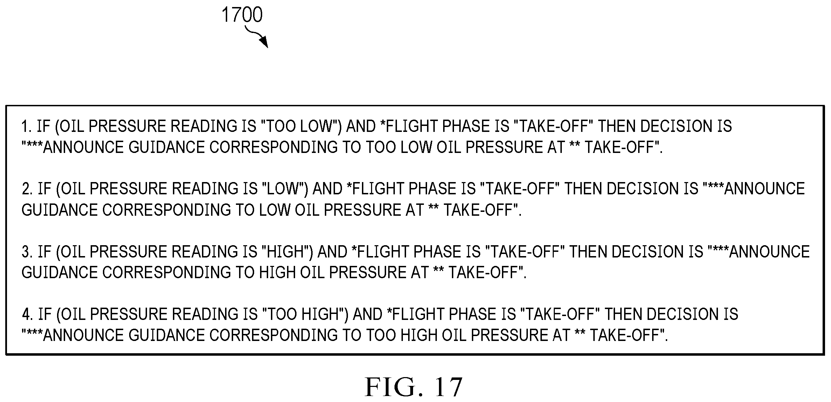

In some embodiments, the FLS 110 is communicably coupled to a human-machine interface (HMI), which may include a color-selectable visual indicator, a speaker, or a graphical user interface (GUI). In addition to outputting command 112 for making an automated change to condition of the oil pressure, the FLS 110 is able to generate and output visual and/or guidance information 142 ("guidance") as defined for example in FIGS. 16 and 17. The guidance information 142, when received by the HMI 140, instructs or alerts a pilot to manually provide user input associated with changing the condition of the oil pressure.

Linguistic variables are the input or output variables of the system whose values are words or sentences from a natural language, instead of numerical values. A linguistic variable is generally decomposed into a set of linguistic terms.

For example, in the case of the oil pump controller 120. Pressure (p) denotes the linguistic variable which represents the oil pressure in the engine main oil pressure line 130.

To qualify the pressure, terms such as "High", "As expected" and "Low" are used in real life. These are the linguistic values of the oil pressure. Then, a function of pressure, F(p) = "too high", "high", "as expected", "low", "too low", can be the set of decompositions for the linguistic variable pressure.

Each member of this decomposition is called a linguistic term and can cover a portion of the overall values of the pressure.

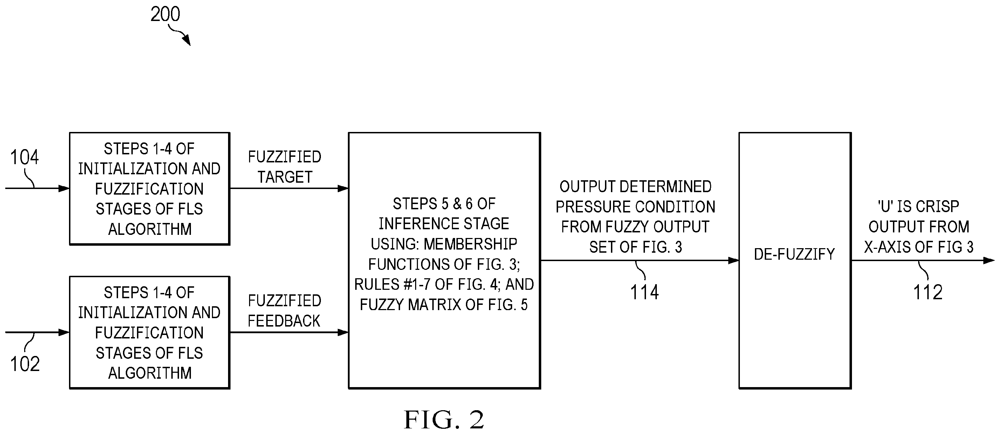

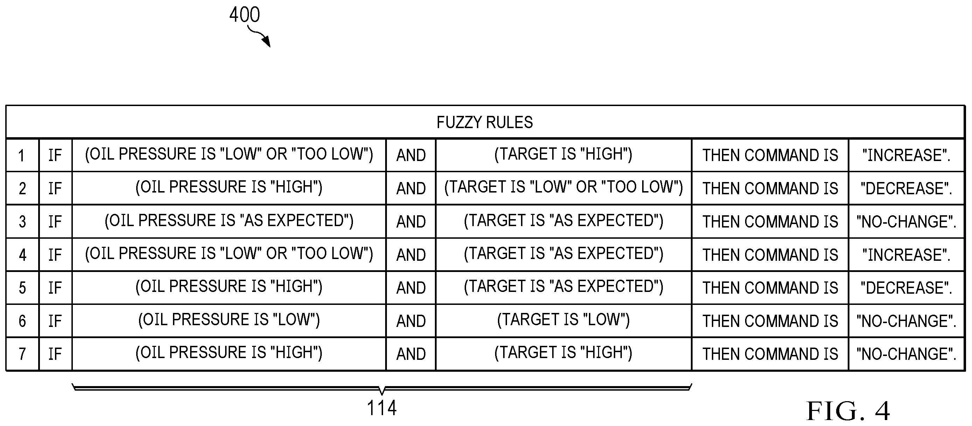

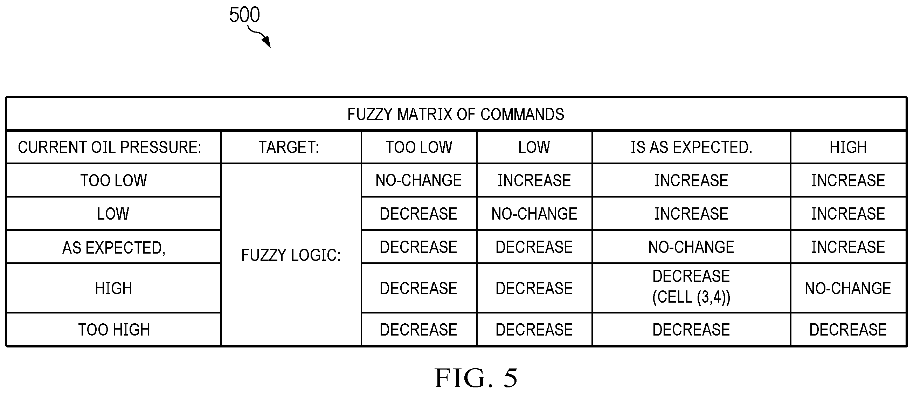

FIG. 2 illustrates an example process 200 within the FLS 110 of FIG. 1 in accordance with this disclosure. The FLS 110 generates a command 112 based on the received measured OPV 102, a linguistic variable (p), membership functions for each linguistic term within a set of linguistic terms for the linguistic variable as shown in FIG. 3, and a set of rules, such as shown in the first set of rules 400 of FIG. 4, and a fuzzy matrix, such as the fuzzy matrix 500 of FIG. 5. The set of rules are defined in part by the target OPV 104. The command 112 can be a numerical value, such as a crisp output denoted as a capitalized U. The FLS 110 generates an inference 114, which is a value between 0 and 1 in the fuzzified-domain, and which denotes a degree of membership (such as a y-axis value of FIG. 3). The inference 114 represents the output of the IF statements within the set of rules. Within the rules, an IF statement includes OR and AND operations.

FIG. 3 illustrates example membership functions 300 allocating an input of measured oil pressure value to an oil pressure condition within the engine oil system, in accordance with this disclosure. The membership functions 300 are used by the FLS 110 to assign the measured OPV 102 to one of the conditions: first 'Too Low' condition 310; second 'Too Low' condition 320; 'Low" condition 330; 'As expected' condition 340; 'High' condition 350; first 'Too High' condition 360; and second 'Too High' condition 370.

Membership functions are used in the fuzzification and defuzzification steps of a FLS, to map the non-fuzzy input values to fuzzy linguistic terms and vice versa.

A membership function is used to quantify a linguistic term.

For instance, in FIG. 3, membership functions for the linguistic terms of pressure variable are plotted.

Note that, an important characteristic of fuzzy logic is that a numerical value does not have to be fuzzified using only one membership function.

In other words, a value can belong to multiple sets at the same time.

For example, according to Figure 3, a pressure value can be considered as "low" and "too low"" at the same time, but with different degree of memberships (which determine to which of the two the current engine oil pressure condition belongs). This may be dependent on the detected trend of change of the engine oil pressure (e.g., trend of the delta pressure indicates that the oil pressure is going into the "Too Low" range, rather than into the "Low" range, then the membership determines the condition as being "Too Low") or other criteria can be applied, e.g., choose the maximum of the two membership functions.

There are different forms of membership functions, the type of the membership function can be context dependent, and it is generally chosen arbitrarily according to the user experience.

In the particular example membership functions 300 shown, criteria for the membership which the trend in engine oil pressure changes fall into are used by the FLS for it to consider the range in which engine oil pressure is. These would be considered by the FLS as "Too Low ", "Low", "As expected", "High", Too High".

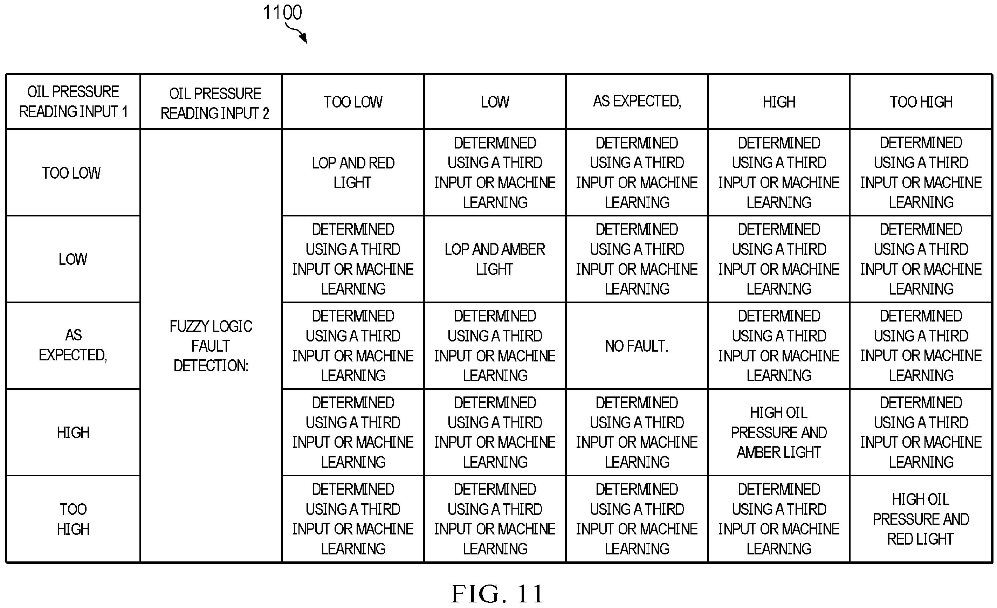

The FLS 110 is able to respond to each of the ranges, as defined by the membership functions. Depending on the range, the FLS 110 provides commands 112 to the engine oil pressure controller 120 as defined in a first fuzzy matrix such as shown in FIG. 5, and provides a cockpit display such as per a second, third, and fourth fuzzy matrix, such as shown in FIGS. 11, 13, and 15.

FIG. 4 illustrates an example first set of rules 400 for determining a command to be sent to the oil pressure controller in accordance with this disclosure.

FIG. 5 illustrates a first fuzzy matrix 500 of commands to be sent to the oil pressure controller based on the first set of rules shown in FIG. 4, in accordance with this disclosure.

In a FLS, a rule base is constructed to control the output variable. A fuzzy rule is a simple IF-THEN rule with a condition and a conclusion.

Under the first fuzzy matrix 500, sample fuzzy rules for the oil pressure controller system are listed. The first fuzzy matrix 500 shows the matrix representation of the fuzzy rules for the said FLS. Row captions in the matrix contain the values that current engine oil pressure can take, column captions contain the values for target oil pressure, and each cell is the resulting command when the input variables take the values in that row and column.

For instance, the cell (3, 4) in the matrix can be read as follows: If oil pressure is High, but the target is "As expected", the FLS will send a command: "decrease" to the oil pressure controller.

The evaluations of the fuzzy rules and the combination of the results of the individual rules are performed using fuzzy set operations. The operations on fuzzy sets are different than the operations on non-fuzzy sets.

For example, let $\mu_A$ and $\mu_b$ be the membership functions for fuzzy sets A and B. Since the determination of the membership function from between the $\mu_A$ and $\mu_b$ can be defined in multiple ways, dependent on the applicable rules to the case analyzed, the determination can be done using any of the logical rules, which can properly allocate the membership function to the conditions at which currently engine oil pressure is.

For example, while the values A and B, both may belong to the membership functions "Low" and "too Low", the selection of one out of the two can be performed by the use of the fuzzy set operations. Among others, the selection can be for the maximum of the two $\mu_A$ and $\mu_b$. This would be done by the AND operators on these sets, comparatively.

Fuzzy set operation would be to determine max $\{\mu_A, \mu_b\}$.

While, dependent on expected outcome from the fuzzy set operation, the determination of the membership function can use other logical functions, such as AND, OR, the result of which may be one of the two $\{\mu_A, \mu_b\}$ selected.

After evaluating the result of each rule, these results should be combined to obtain a result. This process is called inference. The results of individual rules can be combined in different ways.

Below are some possible accumulation methods that are used to combine the results of individual rules. The maximum algorithm is generally used for accumulation.

Maximum:

Bounded sum:

$$\max \{\mu_A, \mu_b\}.$$

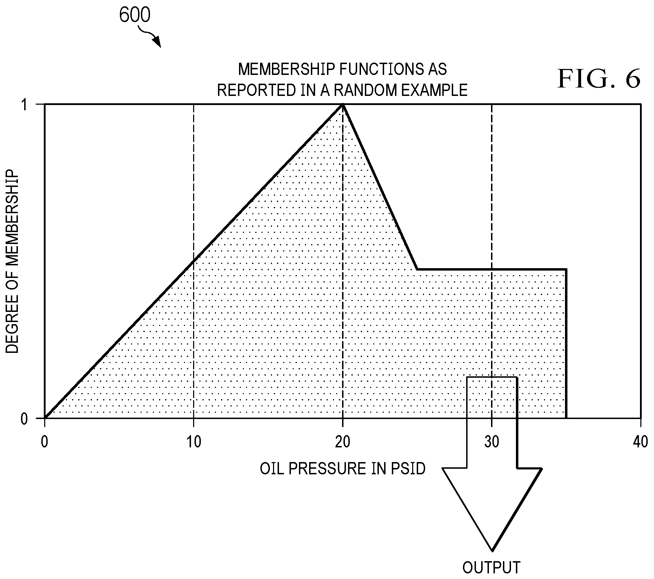

FIG. 6 illustrates an example possible inference 600, which is output from the membership functions changing with the engine oil pressure changed over time, in accordance with this disclosure. FIG. 6 is related to a defuzzification stage.

After the inference step, the overall result is a fuzzy value. This result should be defuzzied to obtain a final crisp output. This is the purpose of the defuzzifier component of a FLS. Defuzzification is performed according to the membership function of the output variable. For instance, assume that the result in the membership functions 300 is obtained at the end of the inference 600 (reported during engine main oil pressure changes from 0 to 35 psid) of FIG. 6. In this figure, the shaded areas all belong to the fuzzy result. The purpose is to obtain a crisp value, represented with a dot in the figure, from this fuzzy result at every pre-defined time step.

There are different algorithms for defuzzification. First a function $u(\mu(p))$ is determined for the obtained changes in oil pressure (see FIG. 6 for the boarders of the area that is the output, called U). Then, dependent on the determining factor in the output, the function $u(\mu(p))$ can be used to either determine the area under the function (U), the center of gravity of the area, the variability - such as its maxima and minima, or a trend analysis for the function being in increasing and decreasing tendency.

Based on multiple criteria that determine whether the variability of the oil pressure is acceptable or not, the defuzzification is done for obtaining the output from determination (whether the changes in the function $u(\mu(p))$ are acceptable or not).

Variables in the FLS algorithm include: a capitalized *U* denoting a result of defuzzification; a lowercase *u* denoting an output variable; $\mu$ denoting a membership function after accumulation; i denoting an index; *min* denoting lower limit for defuzzification; and *max* denoting an upper limit for defuzzification.

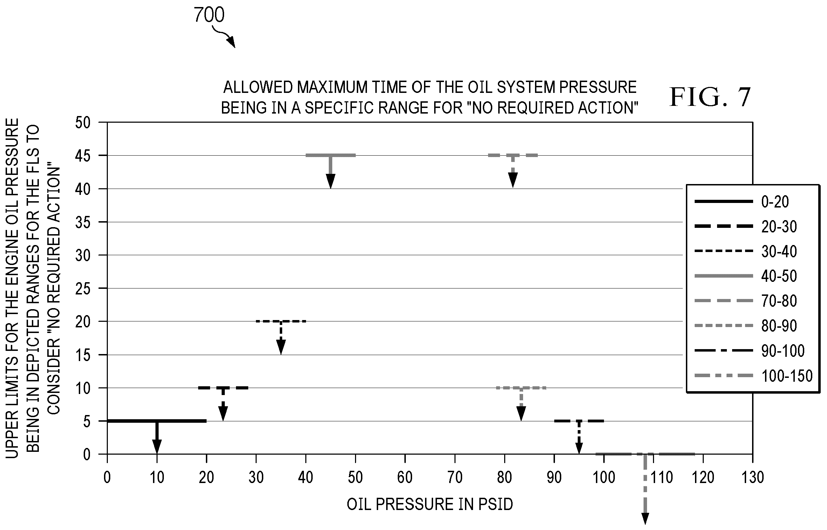

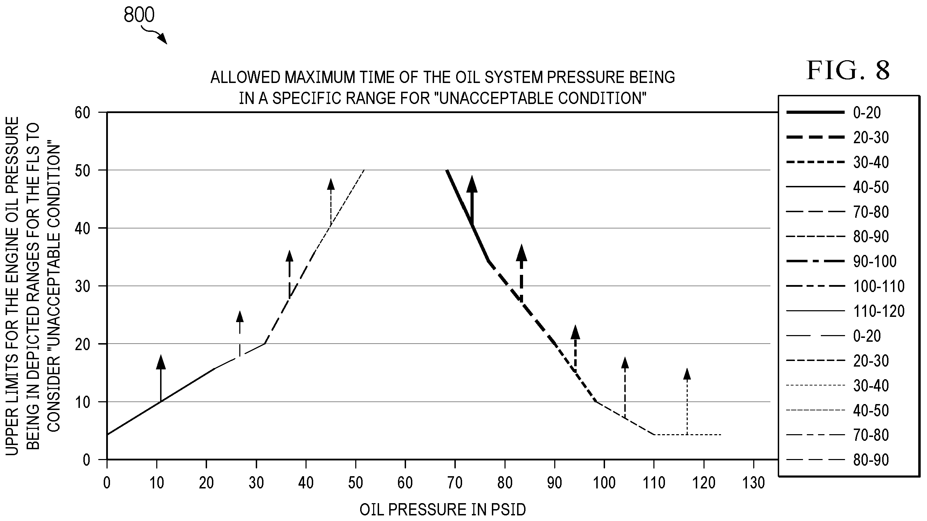

FIG. 7 illustrates example acceptance criteria 700 for the FLS to determine whether engine oil pressure is in an acceptable range, such that continued monitoring with "No Required Action" is needed, in accordance with this disclosure. FIG. 8 illustrates example rejection criteria 800 for the FLS to determine whether engine oil pressure is in an unacceptable range, in accordance with this disclosure.

In this option, the FLS would still provide commands to the oil pressure controller as defined in Fuzzy matrix 1. However, it would be equipped with a function to determine when engine oil pressure state is acceptable, when is unacceptable and when the crew should be warned about the current engine oil pressure state.

In this additional function, another possibility from membership functions, is used. It is by defining conditions corresponding to different acceptance criteria for engine oil pressure system. This would require from the FLS determining in which state engine oil pressure system is. This would be done based on the FLS monitored changes of the engine oil pressure in time and based on the pre-defined oil pressure state determining conditions (e.g., as presented in FIG. 7 and FIG. 8, and in the corresponding instructions).

Referring to acceptance criteria 700 of FIG. 7, an example of the criteria defined for the FLS to use to determine the condition at which engine oil pressure system currently is.

Determination of the oil pressure state would be done by the FLS that would be monitoring, recording, and analyzing engine oil pressure, and would be determining in which range engine oil pressure is. The FLS would be counting time the engine oil pressure is in the current range of oil pressure.

The FLS would be using the determined current range of engine oil pressure and time the system is in that range, and using these two the FLS would be continuously comparing it to the allowed criteria in the oil pressure determining thresholds (e.g., the thresholds shown in FIG. 7).

As an example, the thresholds given in FIG. 7 would be for the FLS to determine when engine oil pressure condition is acceptable and of no risk. Oil pressure being below the presented thresholds for the allowed time would be considered by the FLS as "No required action" by the crew. At this state the FLS would be to continue monitoring and to continue analyzing engine oil pressure for any of the thresholds being exceeded.

Arrows pointing down indicate that below the predefined thresholds of oil pressure and time it lasts, no action is required, oil pressure is good as is and the FLS should continue monitoring engine oil pressure (and would also continue providing commands to the oil pressure controller as determined per the first fuzzy matrix 500).

Referring to rejection criteria 800 of FIG. 8, using the same records of the range in which engine oil pressure is and for what time, the FLS 110 would compare the two to the thresholds which determine an unacceptable engine oil pressure condition.

These would be considered by the FLS as "Required action - warn the crew." The FLS would be to either provide voice message or would be to produce warning message that will be displayed on the cockpit or will trigger a red light on the cockpit for the oil pressure and/or would trigger any combination of these.

Depending on the FLS authority over the oil pressure controller, the FLS reaction to the detected "Unacceptable condition" can include providing a command to shut down oil pump, close a main flow, open an additional oil flow line, whichever options are available for the FLS to be used in urgent situation of an unacceptable condition.

Arrows pointing up indicate that the oil pressure above the presented level is unacceptable and action must be taken. The FLS is to send a warning to the cockpit (flashing light, voice message, warning message, fault code indication, information about an identified failure or any combination of these as pre-defined) and a command to the oil pressure controller as defined for the detected unacceptable condition (the FLS would also continue providing commands to the oil pressure controller as determined according to the first Fuzzy Matrix 500 of FIG. 5).

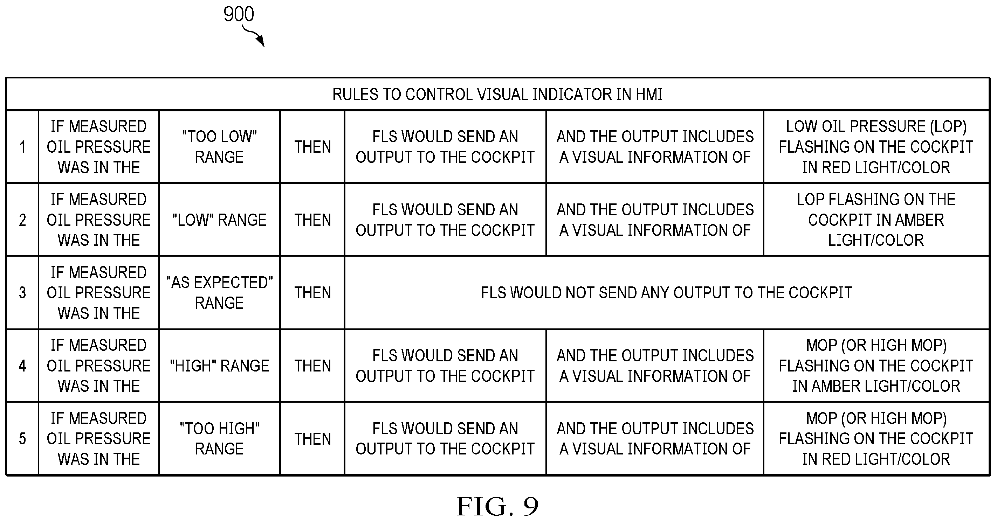

FIG. 9 illustrates an example set of rules 900 for outputting visual information 142 to an HMI 140 visible to crewmembers (such as a pilot in a cockpit) of an aircraft in a case in which the FLS has determined the oil pressure condition based on the first Fuzzy matrix 500 of FIG. 5, but does not receive a confirmed pre-determined input in accordance with this disclosure. In this case, the FLS 110 determines oil pressure but does not receive a confirmed pre-determined input on engine oil pressure. The determined engine oil pressure can be used in the same way as presented in the first Fuzzy matrix 500 of FIG. 5. or can be used to produce visual information to the crew on the engine oil pressure condition from among: "Too low," "Low," "As expected," "High," or "Too high" (see the Fuzzy Rules in the second Fuzzy matrix 1100 of FIG. 11) and/or can be used for cockpit display.

For example, consider an oil pressure system monitored by a FLS. The system monitors engine main oil pressure according to the current oil pressure of the main oil line and the target value (see the second Fuzzy matrix 1100 of FIG. 11).

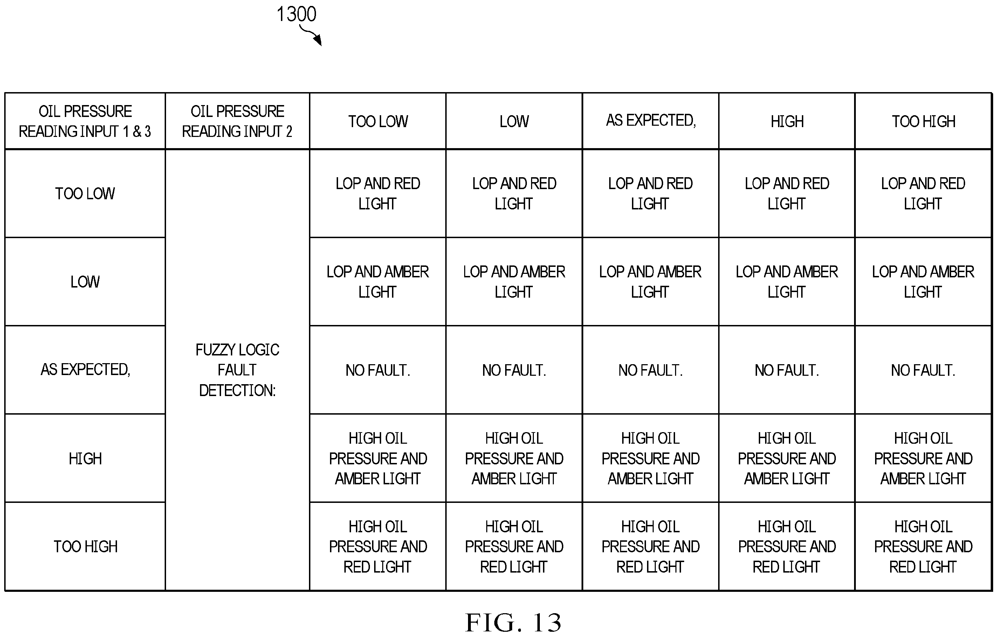

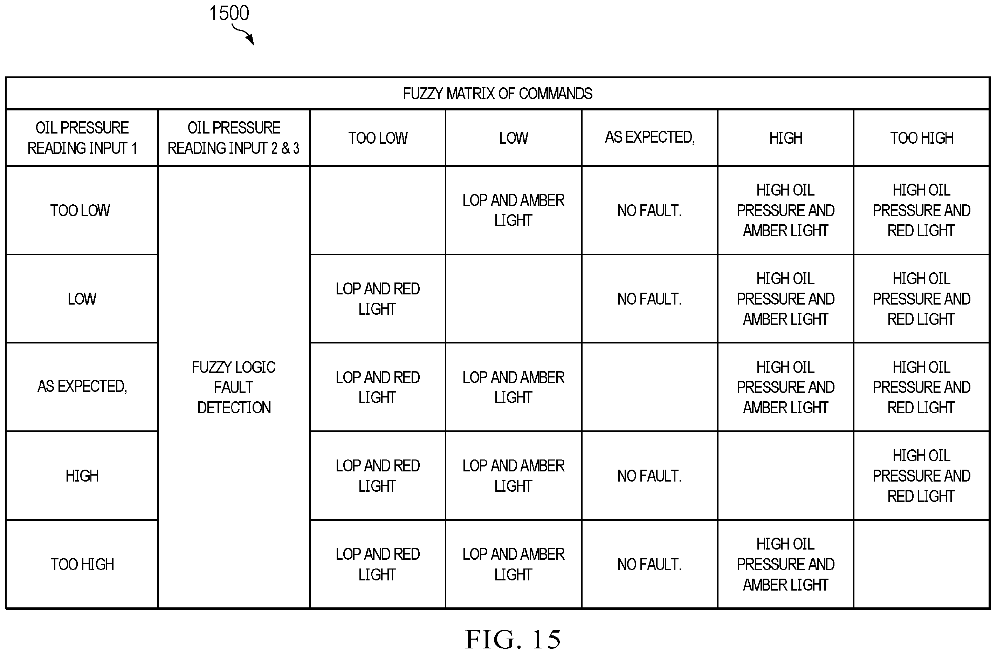

For the FLS to do the periodic comparison, the FLS uses inputs from three sensors, where the two are the primary inputs and the third one is the back-up. The back-up is used in case the two primary inputs do not provide consistent inputs on oil pressure, then the back-up input is used to determine which of the two primary inputs is the correct one (see the third and fourth Fuzzy matrices 1300 and 1500 of FIGS. 13 and 15).

Instead of the FLS using the third input, the FLS can determine which of the two primary inputs is the correct one "knowledge based" (e.g., having records from historical flights, from all previously reported deviations between the readings, or having the record on the last consistent reading between the two primary readings).

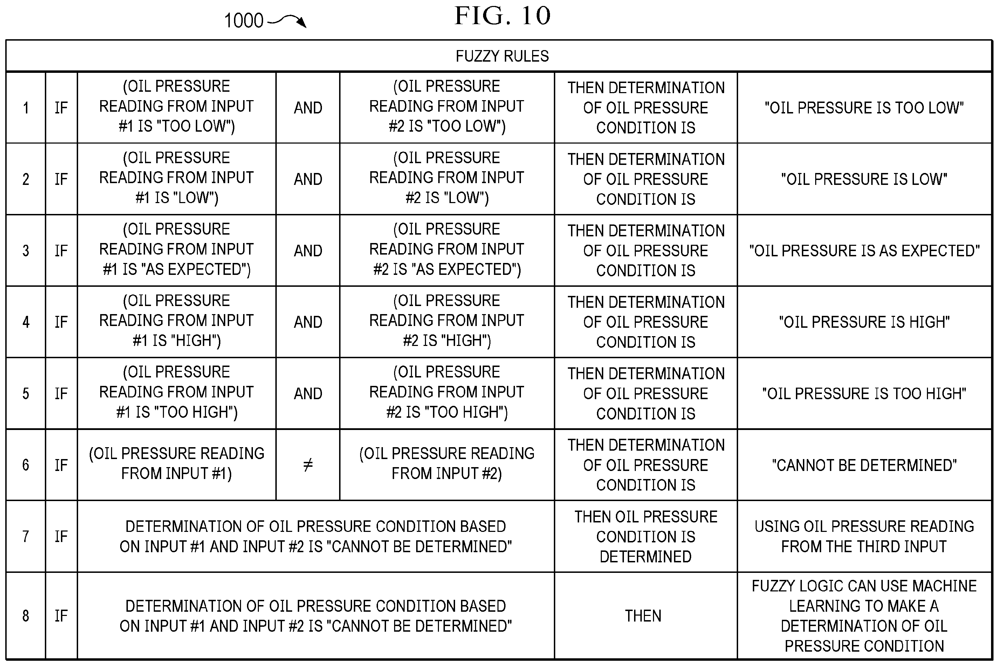

FIG. 10 illustrates an example second set of rules 1000 for determining oil pressure condition in case two inputs to FLS 110 are consistent, according to embodiments of this disclosure. In this case, the two inputs to FLS 110 are consistent, for example, first measured OPV and second measured OPV can be two inputs to the FLS 110 that are consistent when matching each other.

FIG. 11 illustrates an example second fuzzy matrix 1100 of determined oil pressure conditions based on the second set of rules shown in FIG. 10, in accordance with this disclosure. In case the two inputs to FLS on engine oil pressure are inconsistent, a required action and human-machine interface (HMI) indications are provided for each determined oil pressure condition.

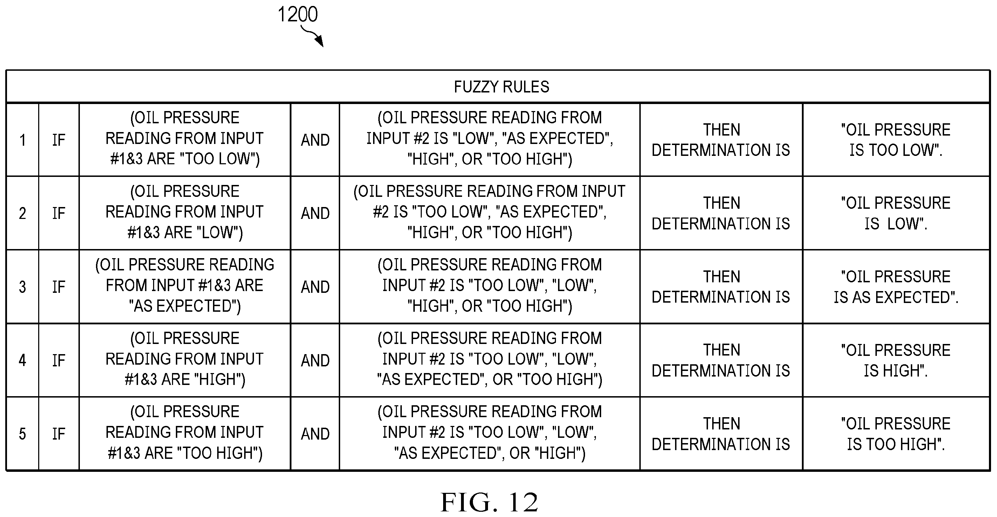

FIG. 12 illustrates an example third set of rules 1200 for determining oil pressure conditions based on three inputs of engine oil pressure in accordance with this disclosure. The third set of rules 1200 are appliable when three inputs (from three sensors 132) are used, and the inputs 1&3 are consistent.

FIG. 13 illustrates an example third fuzzy matrix 1300 of determined oil pressure conditions based on the third set of rules shown in FIG. 12 in accordance with this disclosure. The third fuzzy matrix 1300 is used by the FLS to determine visual indicators (such as cockpit indications) to output via the HMI for each oil pressure condition, based on oil pressure readings from three inputs.

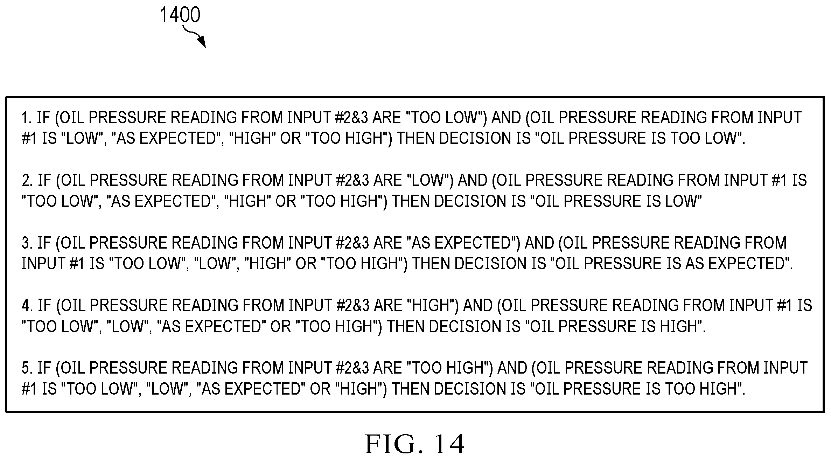

FIG. 14 illustrates an example fourth set of rules 1400 for determining oil pressure conditions based on three inputs of engine oil pressure, in a case in which the second and third inputs are consistent in accordance with this disclosure. The oil pressure condition determined according to the fourth set of rules 1400 are used for the fourth Fuzzy Matrix of FIG. 15. The fourth set of rules 1400 are applicable in the case in which three inputs (such as from first, second, and third sensors 132) received by the FLS 110 are used, and the inputs second and third inputs are consistent.

FIG. 15 illustrates an example fourth fuzzy matrix 1500 of determined oil pressure conditions and HMI indications for each determined oil pressure condition in accordance with this disclosure. The fourth fuzzy matrix 1500 includes determined oil pressure conditions and required cockpit indications.

Although the conditions presented in the different cases relate to oil pressure in the sense of being low, high or as expected, modifications to the principles presented may be that instead of considering oil pressure as low, high or as expected, but in terms of detected oil loss, no loss, or excess oil with the ability to identify the source or location of its occurrence (e.g., when using multiple sensors that allow FLS to identify where oil pressure or oil flow first began to change) should be considered falling within this ID.

FIG. 16 illustrates an example fifth fuzzy matrix 1600 of determined immediate guidance corresponding to oil pressure condition for a case in which the HMI 140 is configured to convey guidance information 142, in accordance with this disclosure.

The fifth fuzzy matrix 1600 can use the same principles as in the other cases, but upon determining the condition of the oil pressure system, the FLS advises the crew on recommended immediate actions to comply with the reported condition of the oil pressure system, as per the fifth Fuzzy Matrix of FIG. 16.

FIG. 17 illustrates an example fifth set of fuzzy rules 1700 for determining FLS guidance to announce verbally or visually via an HMI, in accordance with the fifth fuzzy matrix 1600 shown in FIG. 16, in accordance with this disclosure. The fifth set of fuzzy rules 1600 are applicable to the case in which the HMI 140 is configured to convey guidance information 142.

The term "Flight phase" (illustrated in FIG. 17 with an "*") refers to flight conditions that can include flight phase, but also other flight parameters including airspeed, altitude, and any other as applicable for the FLS to be able to determine the corresponding guidance that it should announce to the crew. Also, information on accompanying failure conditions such as engine fire, high or low oil temperature, chip detection can be provided as inputs to FLS for the FLS to determine the corresponding guidance (such as guidance 142 of FIG. 1) that the FLS will announce to the crew via the HMI.

The term "take-off" (illustrated in FIG. 17 with "***") refers to the flight conditions to be defined for all flight phases (including take-off, climb, cruise, landing, goaround and any other as it is applicable to the airplane mission profile).

The term "announce guidance" (illustrated in FIG. 17 with "***") refers to a function for the FLS to announce, verbally or visually, guidance automatically upon determined guidance corresponding to the oil pressure condition and flight condition, or may keep guidance on standby and transmit it to the crew only upon crew request (request can be a verbal output from FLS to the crew or be upon request received by the FLS as an input from a button installed in the cockpit, which when activated by the crew provides input to the FLS requesting providing the guidance).

The guidance on immediate actions that the FLS recommends can include guidance on the immediate response required to the situation (e.g. shutting down the engine as soon as possible, reducing engine power, monitoring specific engine operating parameters and reacting only if a specific change in them is reported). The guidance on immediate actions that the FLS recommends can include guidance on the maximum time to respond immediately to avoid an unsafe situation, along with a declaration of what is considered an unsafe condition. The guidance on immediate actions that the FLS recommends can include a recommendation that the crew request the opening of additional oil flow or the activation of oil scavenge, if such possibilities exist. The guidance on immediate actions that the FLS recommends can include any other suitable guidance as applicable for the system.

The fourth fuzzy matrix 1500 of FIG. 15 and the presented sample of the fuzzy rules for determining guidance to announce verbally or visually (described below with FIG. 16) are modifiable as applicable for the determination of subsequent action that the FLS will recommend (e.g., to cover for the above listed options).

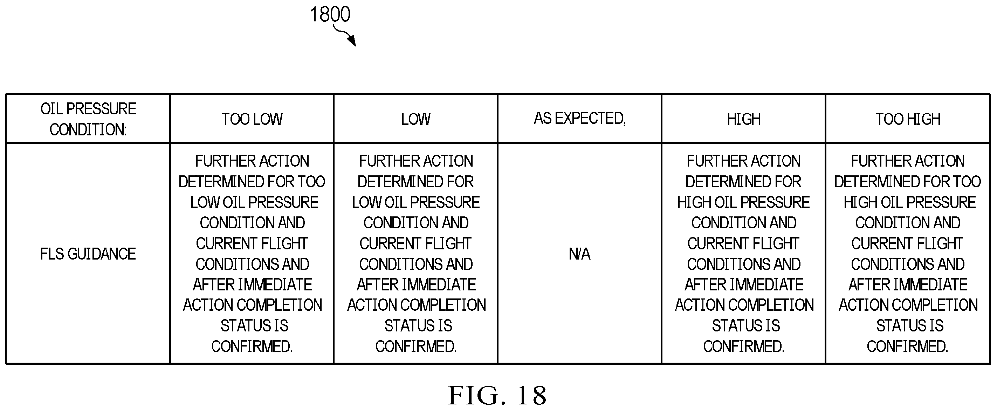

FIG. 18 illustrates an example sixth fuzzy matrix 1800 of determining the subsequent guidance corresponding to oil pressure conditions in accordance with this disclosure. As a complement to the case in which the HMI 140 is configured to convey guidance information 142, fuzzy logic can monitor the execution of the immediate action and determine the next actions required after the immediate action that will allow the flight to be completed safely and uneventfully.

The FLS announces subsequent long-term guidance once it has determined, based on monitored parameters, that the immediate action has been successfully completed, or may keep guidance on standby and transmit it to the crew only upon crew request (in the same manner as in case 4), as per the sixth Fuzzy Matrix 1800.

A sample of the fuzzy rules for determining guidance to announce verbally or visually via an HMI, in accordance with the sixth fuzzy matrix 1800 of FIG. 18, can include:

1. IF (oil pressure reading is "Too low") AND "Immediate action was completed" THEN decision is "announce corresponding subsequent action";
2. IF (oil pressure reading is "Low") AND "Immediate action was completed" THEN decision is "announce corresponding subsequent action";
3. IF (oil pressure reading is "High") AND "Immediate action was completed" THEN decision is "announce corresponding subsequent action"; and
4. IF (oil pressure reading is "Too high") AND "Immediate action was completed" THEN decision is "announce corresponding subsequent action."

The guidance on subsequent actions that the FLS recommends can include advice on maximum time to landing and other relevant information for the pilot, provided immediate action was completed; and warning of a progressive failure condition when the crew did not take immediate action or when immediate action did not produce the expected result. The guidance on subsequent actions that the FLS recommends can include: instructing the crew on the necessary action to eliminate the failure condition other than the proposed immediate response that failed, or if no such action occurred, instructing the crew on the steps to be taken to ensure a safe landing of the aircraft. The guidance on subsequent actions that the FLS recommends can include: monitoring the system when the crew did take immediate action and informing the crew whether the system operates as expected for the uneventful and safe landing to be achieved. Additionally, the guidance on subsequent actions that the FLS recommends can include warning the crew in case upon successful completion of the immediate action, the system operation deviates from expected. Annunciation of the deviation and advising the crew on best action to take with the estimated time the action must be taken to be successful.

The sixth Fuzzy matrix 1800 of FIG. 18 and the presented sample of the fuzzy rules for determining guidance to announce verbally or visually (as shown in the sixth Fuzzy matrix 1800) are modifiable as applicable for the determination of subsequent action that the FLS will recommend (e.g., to cover for the above listed options).

In determination of the subsequent action that the FLS will recommend, inputs on engine operating parameters, on flight conditions and on accompanying failure conditions can be used as practical and as required for the FLS to be able to provide the subsequent actions that accurately correspond to the current situation.

Additionally, in various embodiments, the FLS can use any algorithm to determine immediate and subsequent actions and the execution time for each action, including: the principles presented in the case in which the FLS compares the main oil pressure and the target pressure and produces a command to increase or decrease oil pressure that is sent to the oil pump controller, the principles presented in the case in the FLS determines oil pressure but does not receive a confirmed predetermined input on engine oil pressure, machine learning, trend analysis, or determining a set of criteria met for the current situation.

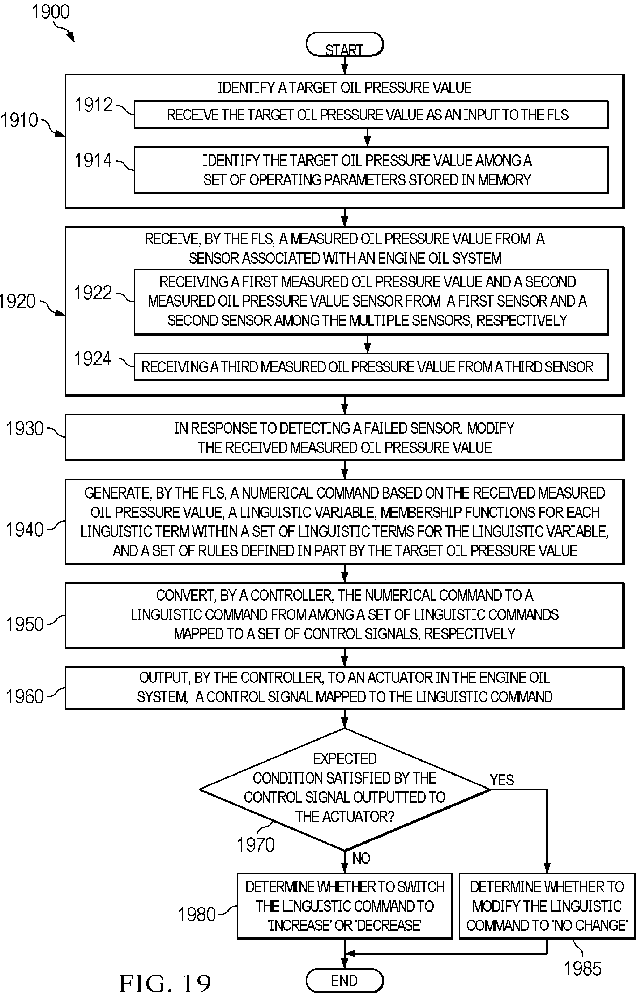

FIG. 19 illustrates an example method for detection and accommodation of oil system failures in the aircraft's propulsion system, using a fuzzy logic-based AI system (FLS), in accordance with this disclosure. The method 1900 is executed by an electronic device that includes processor that includes a fuzzy logic AI system (FLS), such as the FLS 110 of FIG. 1. It is understood that some, but not all of the functions of the processor use the FLS. However, for ease of explanation, functions performed by the FLS may be described as being performed by the processor. In some embodiments, the electronic device further includes a controller, such as the controller 120 of FIG. 1. Accordingly, the method 1900 includes functions executed by the controller 120.

At block 1910, the processor, using the FLS, can identify a target oil pressure value. To identify the target oil pressure value, the processor can receive the target oil pressure value as an input to the FLS. In some embodiments, the target oil pressure value is an operating parameter stored in a memory of the FLS, and the processor is configured to identify the target oil pressure value among a set of operating parameters stored in the memory.

At block 1920, the processor, using the FLS, can receive a measured oil pressure value from a sensor associated with an engine oil system. In some embodiments, the sensor associated with an engine oil system includes multiple sensors. For example, at block 1922, to receive the measured oil pressure value, the processor receives a first measured oil pressure value and a second measured oil pressure value sensor from a first sensor and a second sensor among the multiple sensors, respectively. At block 1924, the processor receives a third measured oil pressure value from a third sensor among the multiple sensors.

At block 1930, the processor, using the FLS, modifies the received measured oil pressure value, in response to detecting a failed sensor. FIGS. 11, 13, and 15 provide examples of detection and accommodation of oil system failures in the aircraft's propulsion system.

More particularly, to determine whether a failed sensor is detected, the processor analyzes the first measured oil pressure value and the second measured oil pressure value to detect corrupted sensor data. The processor modifies the received measured oil pressure value by removing the first measured oil pressure value, in response to a result of the analysis indicating the corrupted sensor data detected within the first measured oil pressure value and the first sensor failed. In some embodiments, the processor modifies the received measured oil pressure value by removing the second measured oil pressure value, in response to the result of the analysis indicating the corrupted sensor data detected within the second measured oil pressure value and the second sensor failed. The processor generates a modified oil pressure value as a result of removing corrupted sensor data from the received measured oil pressure value. This modified oil pressure value is then used by the FLS at block 1940 to generate a numerical command based on the modified oil pressure value. In response to the result of the analysis indicating the corrupted sensor data detected within the first and the second measured oil pressure values, the FLS at block 1940 is able to generate the numerical command based on the third measured oil pressure value. This detection of corrupt sensor data, detection of failed sensors, ability to modify the measured oil pressure value enables the system 100 to accommodate oil system failures. That is, one failed oil pressure sensor is not a single point of failure that cause the engine oil pressure system fail, but instead, the FLS of this disclosure enables multiple sensors (for example, two out of three) to fail while the engine oil pressure system is able to continue operating and maintaining an 'as expected' condition of the oil pressure within the engine oil system.

At block 1940, the processor, using the FLS, can generate a numerical command based on the received measured oil pressure value, a linguistic variable, membership functions for each linguistic term within a set of linguistic terms for the linguistic variable, and a set of rules defined in part by the target oil pressure value.

In some embodiments, the processor, using the FLS, outputs the numerical command to a human-machine interface (HMI) configured to output an indicator of an oil pressure warning. For example, the HMI can display a visible indicator (e.g., color-selectable light) in a cockpit of an aircraft for alerting a pilot. In some embodiments, the processor, using the FLS, outputs to the HMI at least one of: an indicator of an oil pressure warning or guidance information corresponding to oil pressure condition. That is, the HMI is configured to output the indicator of an oil pressure warning and/or guidance information corresponding to oil pressure condition. The guidance information includes at least one of: a warning messages, immediate actions, subsequent actions that follow the immediate actions, or monitored parameters of the immediate action being successful. For example, the guidance information can include subsequent long-term guidance, which is output based on a determination (which is based on the monitored parameters) that the immediate action has been successfully completed. In some embodiments, the processor uses the FLS to outputs (via the HMI) values of the parameters that are monitored, such as operating parameters that are based on physical limitations of the machinery (such as engine) of the aircraft, parameters (including measured sensor data) of the engine oil system 130, flight parameters.

At block 1950, the controller 120 converts the numerical command to a linguistic command from among a set of linguistic commands mapped to a set of control signals, respectively. That is, the controller 120 receives the numerical command from the FLS 110. The controller 120 is configured to select a control signal based on the input received at the input interface 122 of the controller.

At block 1960, the controller 120 outputs, to an actuator in the engine oil system, a control signal mapped to the linguistic command, which is the result of converting the numerical command received at the input interface 122 of the controller 120).

In some embodiments, the set of linguistic commands is mapped to a set of types of change to oil pressure in the engine oil system, respectively. The set of types of change to oil pressure includes no-change, increase, and decrease. The control signal is configured to cause the actuator to perform a function that causes the type of change to oil pressure mapped to the linguistic command.

More particularly, the controller 120 can include a look up table (LUT) that includes a first range of oil pressure values mapped to a first control signal that causes an actuator 134 (such as oil valves and oil pumps) to 'increase' oil pressure in the engine oil system. In response to receiving the first control signal, the actuator 134 updates an ON/OFF state of an oil pump and updates an OPEN/CLOSED state of an oil valve. For example, to increase oil pressure, the actuator 134 may set an oil pump to an ON state or set an oil valve to a CLOSED state. The LUT includes a second range of oil pressure values mapped to a second control signal that causes the actuator 134 to 'decrease' oil pressure in the engine oil system. In response to receiving the second control signal, the actuator 134 updates the ON/OFF state of oil pumps and updates the OPEN/CLOSED state of oil valves. For example, to decrease oil pressure, the actuator 134 may set an oil pump to an OFF state or set an oil valve to an OPEN state.

The LUT includes a third range of oil pressure values mapped to a third control signal that causes the actuator 134 to make 'no change' to oil pressure in the engine oil system. In response to receiving the third control signal, the actuator 134 updates the ON/OFF state of oil pumps and updates the OPEN/CLOSED state of oil valves. For example, depending on whether the switch to the third control signal is from the first or second control signal, to make no change to oil pressure, the actuator 134 may set an oil pump to an ON state or set an oil valve to an OPEN state. Alternatively, depending on whether the switch to the third control signal is from the first or second control signal, to make no change to oil pressure, the actuator 134 may set an oil pump to an OFF state or set an oil valve to a CLOSED state. The LUT within the controller 120 maps the set of numerical commands to the first, second, and third ranges that are respectively mapped to the set of control signals. Effectively, the set of linguistic commands (for example, representing an increase, decrease, or no change desired) are mapped by the LUT to respectively correspond to the set of control signals (such as the first, second, and third control signals, respectively).

At block 1970, the processor determines whether an expected condition is satisfied by the control signal outputted to the actuator. The expected condition can be defined by: a measured difference between the measured oil pressure value and a subsequently measured oil pressure value received from the sensor within a specified time period; an incremental difference expected within the specified time period, based on the type of change to oil pressure mapped to the linguistic command; and a determination that the measured difference is within an expected range of the incremental difference expected.

At blocks 1980 and 1985, the processor determines whether to modify the linguistic command (for example, by modifying the corresponding numerical command) based on a determination result of whether the expected condition is satisfied. The FLS is not limited to only modify a command to be sent to the oil pressure controller, but additionally FIGS. 16 and 18 illustrate that the FLS uses fuzzy rules for selecting FLS guidance to output (for example announce via an output device such as a speaker or graphical user interface (GUI)) verbally or visually via the HMI. The determination whether to modify the linguistic command based on the determination result of whether the expected condition is satisfied further includes selecting FLS guidance to output via the HMI.

For example, at block 1980, in response to a determination result that the expected condition is not satisfied, the processor determines whether to switch the linguistic command to an 'increase' command or to a 'decrease' command.

For example, at block 1985, in response to a determination result that the expected condition is satisfied, the processor determines whether to modify the linguistic command to 'No Change.' If the processor determines to update the linguistic command to the 'No Change' command, then the controller 120 outputs the third control signal corresponding to the 'no change' command, and the method 1900 repeats (for example, the method ends).

At the end of the method, the system 100 continues to monitor the oil pressure within the engine oil system, as such, the sensors continue to measure the oil pressure, and the processor continues to monitor and analyze the measured oil pressure values received from the sensors.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

The skilled person will appreciate that the above description of example embodiments does not define or constrain the intended scope of protection. Modifications, substitutions, and alterations to the described embodiments may be possible without departing from the scope of the invention, which is defined by the appended claims.

**Claims**

1. A method comprising:

   identifying, by a fuzzy logic system (FLS), a target oil pressure value;
   receiving, by the FLS, a measured oil pressure value from a sensor associated with an engine oil system;
   generating, by the FLS, a numerical command based on the received measured oil pressure value, a linguistic variable, membership functions for each linguistic term within a set of linguistic terms for the linguistic variable, and a set of rules defined in part by the target oil pressure value;
   converting, by a controller, the numerical command to a linguistic command from among a set of linguistic commands mapped to a set of control signals, respectively; and
   outputting, by the controller, to an actuator in the engine oil system, a control signal mapped to the linguistic command.

2. The method of Claim 1, wherein:

   the set of linguistic commands is mapped to a set of types of change to oil pressure in the engine oil system, respectively;
   the set of types of change to oil pressure includes no-change, increase, and decrease; and
   the control signal is configured to cause the actuator to perform a function that causes the type of change to oil pressure mapped to the linguistic command; and, optionally,
   wherein the method further comprises:

      determining whether an expected condition is satisfied by the control signal outputted to the actuator, the expected condition defined by:

         a measured difference between the measured oil pressure value and a subsequently measured oil pressure value received from the sensor within a specified time period;
         an incremental difference expected within the specified time period, based on the type of change to oil pressure mapped to the linguistic command; and a determination that the measured difference is within an expected range of the incremental difference expected; and

      determine whether to modify the linguistic command based on a determination result of whether the expected condition is satisfied.

3. The method of Claim 1 or 2, wherein identifying the target oil pressure value further comprises:

   receiving the target oil pressure value as an input to the FLS; or
   identifying the target oil pressure value among a set of operating parameters stored in memory.

4. The method of any preceding claim, further comprising: outputting the numerical command to a human-machine interface (HMI) configured to output at least one of: an indicator of an oil pressure warning, or guidance information corresponding to oil pressure condition,

wherein the guidance information includes at least one of: a warning messages, immediate actions, subsequent actions that follow the immediate actions, or monitored parameters of the immediate action being successful.

5. The method of any preceding claim, wherein:

the sensor associated with an engine oil system includes multiple sensors;
receiving the measured oil pressure value comprises:
receiving a first measured oil pressure value and a second measured oil pressure value sensor from a first sensor and a second sensor among the multiple sensors, respectively;
the method further comprises:

analyzing the first measured oil pressure value and the second measured oil pressure value to detect corrupted sensor data; and
modifying the received measured oil pressure value by removing the first measured oil pressure value, in response to a result of the analysis indicating the corrupted sensor data detected within the first measured oil pressure value and the first sensor failed; and

generating the numerical command based on the received measured oil pressure value comprises:
generating the numerical command based on the modified oil pressure value; and, optionally,

wherein

receiving the measured oil pressure value comprises:
receiving a third measured oil pressure value from a third sensor among the multiple sensors;
the method further comprises:
modifying the received measured oil pressure value by removing the second measured oil pressure value, in response to the result of the analysis indicating the corrupted sensor data detected within the second measured oil pressure value and the second sensor failed; and
generating the numerical command based on the modified oil pressure value comprises:
generating the numerical command based on the third measured oil pressure value, in response to the result of the analysis indicating the corrupted sensor data detected within the first and the second measured oil pressure values.

6. An electronic device comprising:

a processor that includes a fuzzy logic system (FLS) configured to:

identify a target oil pressure value;
receive a measured oil pressure value from a sensor associated with an engine oil system; and
generate a numerical command based on the received measured oil pressure value, a linguistic variable, membership functions for each linguistic term within a set of linguistic terms for the linguistic variable, and a set of rules defined in part by the target oil pressure value;

a controller configured to:

convert the numerical command to a linguistic command from among a set of linguistic commands mapped to a set of control signals, respectively; and
output, to an actuator in the engine oil system, a control signal mapped to the linguistic command.

7. The electronic device of Claim 6, wherein:

the set of linguistic commands is mapped to a set of types of change to oil pressure in the engine oil system, respectively;
the set of types of change to oil pressure includes no-change, increase, and decrease; and
the control signal is configured to cause the actuator to perform a function that causes the type of change to oil pressure mapped to the linguistic command; and, optionally,
wherein the processor is further configured to:

determine whether an expected condition is satisfied by the control signal outputted to the actuator, the expected condition defined by:

a measured difference between the measured oil pressure value and a subsequently measured oil pressure value received from the sensor within a specified time period;
an incremental difference expected within the specified time period, based on the type of change to oil pressure mapped to the linguistic command; and

a determination that the measured difference is within an expected range of the incremental difference expected; and

determine whether to modify the linguistic command based on a determination result of whether the expected condition is satisfied.

8. The electronic device of Claim 6 or 7, wherein to identify the target oil pressure value, the processor is configured to:

receive the target oil pressure value as an input to the FLS; or
identify the target oil pressure value among a set of operating parameters stored in a memory.

9. The electronic device of any of Claims 6 to 8, wherein the processor is further configured to: output the numerical command to a human-machine interface (HMI) configured to output at least one of: an indicator of an oil pressure warning, or guidance information corresponding to oil pressure condition, wherein the guidance information includes at least one of: a warning messages, immediate actions, subsequent actions that follow the immediate actions, or monitored parameters of the immediate action being successful.

10. The electronic device of any of Claims 6 to 9, wherein:

the sensor associated with an engine oil system includes multiple sensors;
to receive the measured oil pressure value, the processor is configured to:
receive a first measured oil pressure value and a second measured oil pressure value sensor from a first sensor and a second sensor among the multiple sensors, respectively;
the processor is further configured to:

analyze the first measured oil pressure value and the second measured oil pressure value to detect corrupted sensor data; and
modify the received measured oil pressure value by removing the first measured oil pressure value, in response to a result of the analysis indicating the corrupted sensor data detected within the first measured oil pressure value and the first sensor failed; and

to generate the numerical command based on the received measured oil pressure value, the processor is configured to:

generate the numerical command based on the modified oil pressure value; and, optionally, wherein
to receive the measured oil pressure value, the FLS is configured to:
receive a third measured oil pressure value from a third sensor among the multiple sensors;
the processor is further configured to:
modify the received measured oil pressure value by removing the second measured oil pressure value, in response to the result of the analysis indicating the corrupted sensor data detected within the second measured oil pressure value and the second sensor failed; and
to generate the numerical command based on the modified oil pressure value, the FLS is configured to:
generate the numerical command based on the third measured oil pressure value, in response to the result of the analysis indicating the corrupted sensor data detected within the first and the second measured oil pressure values.

11. A system comprising:

a processor that includes a fuzzy logic system (FLS) configured to:

identify a target oil pressure value;
receive a measured oil pressure value from a sensor associated with an engine oil system; and
generate a numerical command based on the received measured oil pressure value, a linguistic variable, membership functions for each linguistic term within a set of linguistic terms for the linguistic variable, and a set of rules defined in part by the target oil pressure value;

a controller configured to:

convert the numerical command to a linguistic command from among a set of linguistic commands mapped to a set of control signals, respectively, wherein:

the set of linguistic commands is mapped to a set of types of change to oil pressure in the engine oil system, respectively; and
the set of types of change to oil pressure includes no-change, increase, and decrease; and

output, to an actuator in the engine oil system, a control signal mapped to the linguistic command,

wherein the control signal is configured to cause the actuator to perform a function that causes the type of change to oil pressure mapped to the linguistic command.

12. The system of Claim 11, wherein the processor is further configured to:

determine whether an expected condition is satisfied by the control signal outputted to the actuator, the expected condition defined by:

a measured difference between the measured oil pressure value and a subsequently measured oil pressure value received from the sensor within a specified time period;
an incremental difference expected within the specified time period, based on the type of change to oil pressure mapped to the linguistic command; and
a determination that the measured difference is within an expected range of the incremental difference expected; and

determine whether to modify the linguistic command based on a determination result of whether the expected condition is satisfied.

13. The system of Claim 11 or 12, wherein to identify the target oil pressure value, the processor is configured to:

receive the target oil pressure value as an input to the FLS; or
identify the target oil pressure value among a set of operating parameters stored in a memory.

14. The system of any of Claims 11 to 13, wherein the processor is further configured to: output the numerical command to a human-machine interface (HMI) configured to output at least one of: an indicator of an oil pressure warning, or guidance information corresponding to oil pressure condition,
wherein the guidance information includes at least one of: a warning messages, immediate actions, subsequent actions that follow the immediate actions, or monitored parameters of the immediate action being successful.

15. The system of any of Claims 11 to 14, wherein:

the sensor associated with an engine oil system includes multiple sensors;
to receive the measured oil pressure value, the processor is configured to:
receive a first measured oil pressure value and a second measured oil pressure value sensor from a first sensor and a second sensor among the multiple sensors, respectively;
the processor is further configured to:

analyze the first measured oil pressure value and the second measured oil pressure value to detect corrupted sensor data; and
modify the received measured oil pressure value by removing the first measured oil pressure value, in response to a result of the analysis indicating the corrupted sensor data detected within the first measured oil pressure value and the first sensor failed; and

to generate the numerical command based on the received measured oil pressure value, the processor is configured to:
generate the numerical command based on the modified oil pressure value; and, optionally, wherein
to receive the measured oil pressure value, the FLS is configured to:
receive a third measured oil pressure value from a third sensor among the multiple sensors;
the processor is further configured to:
modify the received measured oil pressure value by removing the second measured oil pressure value, in response to the result of the analysis indicating the corrupted sensor data detected within the second measured oil pressure value and the second sensor failed; and
to generate the numerical command based on the modified oil pressure value, the FLS is configured to:
generate the numerical command based on the third measured oil pressure value, in response to the result of the analysis indicating the corrupted sensor data detected within the first and the second measured oil pressure values.

FIG. 1

FIG. 2

Diagram content (FIG. 2):

104 → [STEPS 1-4 OF INITIALIZATION AND FUZZIFICATION STAGES OF FLS ALGORITHM] → FUZZIFIED TARGET →

102 → [STEPS 1-4 OF INITIALIZATION AND FUZZIFICATION STAGES OF FLS ALGORITHM] → FUZZIFIED FEEDBACK →

[STEPS 5 & 6 OF INFERENCE STAGE USING: MEMBERSHIP FUNCTIONS OF FIG. 3; RULES #1-7 OF FIG. 4; AND FUZZY MATRIX OF FIG. 5] → OUTPUT DETERMINED PRESSURE CONDITION FROM FUZZY OUTPUT SET OF FIG. 3  114 → [DE-FUZZIFY] → 'U' IS CRISP OUTPUT FROM X-AXIS OF FIG 3  112 →

200

FIG. 3

MEMBERSHIP FUNCTIONS ALLOCATING THE FLS TO BELONG TO EITHER "TOO LOW", "LOW", "AS EXPECTED", "HIGH" OR "TOO HIGH" OIL PRESSURE CONDITION

300

Legend:
——— "TOO LOW"
——— "TOO LOW"
— — "LOW"
——— "AS EXPECTED"
—·— "HIGH"
—··— "TOO HIGH" 360
— — "TOO HIGH"

320, 310, 330, 330, 340, 350, 350, 350, 350, 360, 360, 370, 370

OIL PRESSURE IN PSID

DEGREE OF MEMBERSHIP

400

| FUZZY RULES | | | | | | | |
|---|---|---|---|---|---|---|---|
| 1 | IF | (OIL PRESSURE IS "LOW" OR "TOO LOW") | AND | (TARGET IS "HIGH") | THEN COMMAND IS | "INCREASE". |
| 2 | IF | (OIL PRESSURE IS "HIGH") | AND | (TARGET IS "LOW" OR "TOO LOW") | THEN COMMAND IS | "DECREASE". |
| 3 | IF | (OIL PRESSURE IS "AS EXPECTED") | AND | (TARGET IS "AS EXPECTED") | THEN COMMAND IS | "NO-CHANGE". |
| 4 | IF | (OIL PRESSURE IS "LOW" OR "TOO LOW") | AND | (TARGET IS "AS EXPECTED") | THEN COMMAND IS | "INCREASE". |
| 5 | IF | (OIL PRESSURE IS "HIGH") | AND | (TARGET IS "AS EXPECTED") | THEN COMMAND IS | "DECREASE". |
| 6 | IF | (OIL PRESSURE IS "LOW") | AND | (TARGET IS "LOW") | THEN COMMAND IS | "NO-CHANGE". |
| 7 | IF | (OIL PRESSURE IS "HIGH") | AND | (TARGET IS "HIGH") | THEN COMMAND IS | "NO-CHANGE". |

114

FIG. 4

EP 4 667 714 A1

500

| FUZZY MATRIX OF COMMANDS | | | | | |
|---|---|---|---|---|---|
| CURRENT OIL PRESSURE: | TARGET: | TOO LOW | LOW | IS AS EXPECTED. | HIGH |
| TOO LOW | FUZZY LOGIC: | NO-CHANGE | INCREASE | INCREASE | INCREASE |
| LOW | | DECREASE | NO-CHANGE | INCREASE | INCREASE |
| AS EXPECTED, | | DECREASE | DECREASE | NO-CHANGE | INCREASE |
| HIGH | | DECREASE | DECREASE | DECREASE (CELL (3,4)) | NO-CHANGE |
| TOO HIGH | | DECREASE | DECREASE | DECREASE | DECREASE |

FIG. 5

600

MEMBERSHIP FUNCTIONS AS
REPORTED IN A RANDOM EXAMPLE

FIG. 6

DEGREE OF MEMBERSHIP

OIL PRESSURE IN PSID

OUTPUT

FIG. 7

ALLOWED MAXIMUM TIME OF THE OIL SYSTEM PRESSURE
BEING IN A SPECIFIC RANGE FOR "NO REQUIRED ACTION"

OIL PRESSURE IN PSID

UPPER LIMITS FOR THE ENGINE OIL PRESSURE
BEING IN DEPICTED RANGES FOR THE FLS TO
CONSIDER "NO REQUIRED ACTION"

Legend:
0-20
20-30
30-40
40-50
70-80
80-90
90-100
100-150

FIG. 8

900

| RULES TO CONTROL VISUAL INDICATOR IN HMI | | | | | |
|---|---|---|---|---|---|
| 1 | IF MEASURED OIL PRESSURE WAS IN THE | "TOO LOW" RANGE | THEN | FLS WOULD SEND AN OUTPUT TO THE COCKPIT | AND THE OUTPUT INCLUDES A VISUAL INFORMATION OF | LOW OIL PRESSURE (LOP) FLASHING ON THE COCKPIT IN RED LIGHT/COLOR |
| 2 | IF MEASURED OIL PRESSURE WAS IN THE | "LOW" RANGE | THEN | FLS WOULD SEND AN OUTPUT TO THE COCKPIT | AND THE OUTPUT INCLUDES A VISUAL INFORMATION OF | LOP FLASHING ON THE COCKPIT IN AMBER LIGHT/COLOR |
| 3 | IF MEASURED OIL PRESSURE WAS IN THE | "AS EXPECTED" RANGE | THEN | FLS WOULD NOT SEND ANY OUTPUT TO THE COCKPIT | | |
| 4 | IF MEASURED OIL PRESSURE WAS IN THE | "HIGH" RANGE | THEN | FLS WOULD SEND AN OUTPUT TO THE COCKPIT | AND THE OUTPUT INCLUDES A VISUAL INFORMATION OF | MOP (OR HIGH MOP) FLASHING ON THE COCKPIT IN AMBER LIGHT/COLOR |
| 5 | IF MEASURED OIL PRESSURE WAS IN THE | "TOO HIGH" RANGE | THEN | FLS WOULD SEND AN OUTPUT TO THE COCKPIT | AND THE OUTPUT INCLUDES A VISUAL INFORMATION OF | MOP (OR HIGH MOP) FLASHING ON THE COCKPIT IN RED LIGHT/COLOR |

FIG. 9

EP 4 667 714 A1

## FIG. 10

1000 ⟿

EP 4 667 714 A1

| | | | | | |
|---|---|---|---|---|---|
| | | FUZZY RULES | | | |
| 1 | IF | (OIL PRESSURE READING FROM INPUT #1 IS "TOO LOW") | AND | (OIL PRESSURE READING FROM INPUT #2 IS "TOO LOW") | THEN DETERMINATION OF OIL PRESSURE CONDITION IS | "OIL PRESSURE IS TOO LOW" |
| 2 | IF | (OIL PRESSURE READING FROM INPUT #1 IS "LOW") | AND | (OIL PRESSURE READING FROM INPUT #2 IS "LOW") | THEN DETERMINATION OF OIL PRESSURE CONDITION IS | "OIL PRESSURE IS LOW" |
| 3 | IF | (OIL PRESSURE READING FROM INPUT #1 IS "AS EXPECTED") | AND | (OIL PRESSURE READING FROM INPUT #2 IS "AS EXPECTED") | THEN DETERMINATION OF OIL PRESSURE CONDITION IS | "OIL PRESSURE IS AS EXPECTED" |
| 4 | IF | (OIL PRESSURE READING FROM INPUT #1 IS "HIGH") | AND | (OIL PRESSURE READING FROM INPUT #2 IS "HIGH") | THEN DETERMINATION OF OIL PRESSURE CONDITION IS | "OIL PRESSURE IS HIGH" |
| 5 | IF | (OIL PRESSURE READING FROM INPUT #1 IS "TOO HIGH") | AND | (OIL PRESSURE READING FROM INPUT #2 IS "TOO HIGH") | THEN DETERMINATION OF OIL PRESSURE CONDITION IS | "OIL PRESSURE IS TOO HIGH" |
| 6 | IF | (OIL PRESSURE READING FROM INPUT #1) | ≠ | (OIL PRESSURE READING FROM INPUT #2) | THEN DETERMINATION OF OIL PRESSURE CONDITION IS | "CANNOT BE DETERMINED" |
| 7 | IF | DETERMINATION OF OIL PRESSURE CONDITION BASED ON INPUT #1 AND INPUT #2 IS "CANNOT BE DETERMINED" | | | THEN OIL PRESSURE CONDITION IS DETERMINED | USING OIL PRESSURE READING FROM THE THIRD INPUT |
| 8 | IF | DETERMINATION OF OIL PRESSURE CONDITION BASED ON INPUT #1 AND INPUT #2 IS "CANNOT BE DETERMINED" | | | THEN | FUZZY LOGIC CAN USE MACHINE LEARNING TO MAKE A DETERMINATION OF OIL PRESSURE CONDITION |

1100

| OIL PRESSURE READING INPUT 1 | OIL PRESSURE READING INPUT 2 | TOO LOW | LOW | AS EXPECTED, | HIGH | TOO HIGH |
|---|---|---|---|---|---|---|
| TOO LOW | FUZZY LOGIC FAULT DETECTION: | LOP AND RED LIGHT | DETERMINED USING A THIRD INPUT OR MACHINE LEARNING | DETERMINED USING A THIRD INPUT OR MACHINE LEARNING | DETERMINED USING A THIRD INPUT OR MACHINE LEARNING | DETERMINED USING A THIRD INPUT OR MACHINE LEARNING |
| LOW | | DETERMINED USING A THIRD INPUT OR MACHINE LEARNING | LOP AND AMBER LIGHT | DETERMINED USING A THIRD INPUT OR MACHINE LEARNING | DETERMINED USING A THIRD INPUT OR MACHINE LEARNING | DETERMINED USING A THIRD INPUT OR MACHINE LEARNING |
| AS EXPECTED, | | DETERMINED USING A THIRD INPUT OR MACHINE LEARNING | DETERMINED USING A THIRD INPUT OR MACHINE LEARNING | NO FAULT. | DETERMINED USING A THIRD INPUT OR MACHINE LEARNING | DETERMINED USING A THIRD INPUT OR MACHINE LEARNING |
| HIGH | | DETERMINED USING A THIRD INPUT OR MACHINE LEARNING | DETERMINED USING A THIRD INPUT OR MACHINE LEARNING | DETERMINED USING A THIRD INPUT OR MACHINE LEARNING | HIGH OIL PRESSURE AND AMBER LIGHT | DETERMINED USING A THIRD INPUT OR MACHINE LEARNING |
| TOO HIGH | | DETERMINED USING A THIRD INPUT OR MACHINE LEARNING | DETERMINED USING A THIRD INPUT OR MACHINE LEARNING | DETERMINED USING A THIRD INPUT OR MACHINE LEARNING | DETERMINED USING A THIRD INPUT OR MACHINE LEARNING | HIGH OIL PRESSURE AND RED LIGHT |

FIG. 11

1200

| | | | | | | |
|---|---|---|---|---|---|---|
| FUZZY RULES | | | | | | |
| 1 | IF | (OIL PRESSURE READING FROM INPUT #1&3 ARE "TOO LOW") | AND | (OIL PRESSURE READING FROM INPUT #2 IS "LOW", "AS EXPECTED", "HIGH", OR "TOO HIGH") | THEN DETERMINATION IS | "OIL PRESSURE IS TOO LOW". |
| 2 | IF | (OIL PRESSURE READING FROM INPUT #1&3 ARE "LOW") | AND | (OIL PRESSURE READING FROM INPUT #2 IS "TOO LOW", "AS EXPECTED", "HIGH", OR "TOO HIGH") | THEN DETERMINATION IS | "OIL PRESSURE IS LOW". |
| 3 | IF | (OIL PRESSURE READING FROM INPUT #1&3 ARE "AS EXPECTED") | AND | (OIL PRESSURE READING FROM INPUT #2 IS "TOO LOW", "LOW", "HIGH", OR "TOO HIGH") | THEN DETERMINATION IS | "OIL PRESSURE IS AS EXPECTED". |
| 4 | IF | (OIL PRESSURE READING FROM INPUT #1&3 ARE "HIGH") | AND | (OIL PRESSURE READING FROM INPUT #2 IS "TOO LOW", "LOW", "AS EXPECTED", OR "TOO HIGH") | THEN DETERMINATION IS | "OIL PRESSURE IS HIGH". |
| 5 | IF | (OIL PRESSURE READING FROM INPUT #1&3 ARE "TOO HIGH") | AND | (OIL PRESSURE READING FROM INPUT #2 IS "TOO LOW", "LOW", "AS EXPECTED", OR "HIGH") | THEN DETERMINATION IS | "OIL PRESSURE IS TOO HIGH". |

FIG. 12

EP 4 667 714 A1

1300

| OIL PRESSURE READING INPUT 1 & 3 | OIL PRESSURE READING INPUT 2 | TOO LOW | LOW | AS EXPECTED, | HIGH | TOO HIGH |
|---|---|---|---|---|---|---|
| TOO LOW | FUZZY LOGIC FAULT DETECTION: | LOP AND RED LIGHT | LOP AND RED LIGHT | LOP AND RED LIGHT | LOP AND RED LIGHT | LOP AND RED LIGHT |
| LOW | | LOP AND AMBER LIGHT | LOP AND AMBER LIGHT | LOP AND AMBER LIGHT | LOP AND AMBER LIGHT | LOP AND AMBER LIGHT |
| AS EXPECTED, | | NO FAULT. | NO FAULT. | NO FAULT. | NO FAULT. | NO FAULT. |
| HIGH | | HIGH OIL PRESSURE AND AMBER LIGHT | HIGH OIL PRESSURE AND AMBER LIGHT | HIGH OIL PRESSURE AND AMBER LIGHT | HIGH OIL PRESSURE AND AMBER LIGHT | HIGH OIL PRESSURE AND AMBER LIGHT |
| TOO HIGH | | HIGH OIL PRESSURE AND RED LIGHT | HIGH OIL PRESSURE AND RED LIGHT | HIGH OIL PRESSURE AND RED LIGHT | HIGH OIL PRESSURE AND RED LIGHT | HIGH OIL PRESSURE AND RED LIGHT |

FIG. 13

1400

1. IF (OIL PRESSURE READING FROM INPUT #2&3 ARE "TOO LOW") AND (OIL PRESSURE READING FROM INPUT #1 IS "LOW", "AS EXPECTED", "HIGH" OR "TOO HIGH") THEN DECISION IS "OIL PRESSURE IS TOO LOW".

2. IF (OIL PRESSURE READING FROM INPUT #2&3 ARE "LOW") AND (OIL PRESSURE READING FROM INPUT #1 IS "TOO LOW", "AS EXPECTED", "HIGH" OR "TOO HIGH") THEN DECISION IS "OIL PRESSURE IS LOW"

3. IF (OIL PRESSURE READING FROM INPUT #2&3 ARE "AS EXPECTED") AND (OIL PRESSURE READING FROM INPUT #1 IS "TOO LOW", "LOW", "HIGH" OR "TOO HIGH") THEN DECISION IS "OIL PRESSURE IS AS EXPECTED".

4. IF (OIL PRESSURE READING FROM INPUT #2&3 ARE "HIGH") AND (OIL PRESSURE READING FROM INPUT #1 IS "TOO LOW", "LOW", "AS EXPECTED" OR "TOO HIGH") THEN DECISION IS "OIL PRESSURE IS HIGH".

5. IF (OIL PRESSURE READING FROM INPUT #2&3 ARE "TOO HIGH") AND (OIL PRESSURE READING FROM INPUT #1 IS "TOO LOW", "LOW", "AS EXPECTED" OR "HIGH") THEN DECISION IS "OIL PRESSURE IS TOO HIGH".

FIG. 14

EP 4 667 714 A1

1500

| FUZZY MATRIX OF COMMANDS | | | | | | |
|---|---|---|---|---|---|---|
| OIL PRESSURE READING INPUT 1 | OIL PRESSURE READING INPUT 2 & 3 | TOO LOW | LOW | AS EXPECTED, | HIGH | TOO HIGH |
| TOO LOW | FUZZY LOGIC FAULT DETECTION | | LOP AND AMBER LIGHT | NO FAULT. | HIGH OIL PRESSURE AND AMBER LIGHT | HIGH OIL PRESSURE AND RED LIGHT |
| LOW | | LOP AND RED LIGHT | | NO FAULT. | HIGH OIL PRESSURE AND AMBER LIGHT | HIGH OIL PRESSURE AND RED LIGHT |
| AS EXPECTED, | | LOP AND RED LIGHT | LOP AND AMBER LIGHT | | HIGH OIL PRESSURE AND AMBER LIGHT | HIGH OIL PRESSURE AND RED LIGHT |
| HIGH | | LOP AND RED LIGHT | LOP AND AMBER LIGHT | NO FAULT. | | HIGH OIL PRESSURE AND RED LIGHT |
| TOO HIGH | | LOP AND RED LIGHT | LOP AND AMBER LIGHT | NO FAULT. | HIGH OIL PRESSURE AND AMBER LIGHT | |

FIG. 15

1600

| OIL PRESSURE CONDITION: | TOO LOW | LOW | AS EXPECTED | HIGH | TOO HIGH |
|---|---|---|---|---|---|
| FLS GUIDANCE | IMMEDIATE ACTION AS DEFINED FOR TOO LOW OIL PRESSURE CONDITION AND THE CURRENT FLIGHT CONDITIONS. | IMMEDIATE ACTION AS DEFINED FOR LOW OIL PRESSURE CONDITION AND THE CURRENT FLIGHT CONDITIONS. | N/A | IMMEDIATE ACTION AS DEFINED FOR HIGH OIL PRESSURE CONDITION AND THE CURRENT FLIGHT CONDITIONS. | IMMEDIATE ACTION AS DEFINED FOR TOO HIGH OIL PRESSURE CONDITION AND THE CURRENT FLIGHT CONDITIONS. |

FIG. 16

EP 4 667 714 A1

1700

1. IF (OIL PRESSURE READING IS "TOO LOW") AND *FLIGHT PHASE IS "TAKE-OFF" THEN DECISION IS "***ANNOUNCE GUIDANCE CORRESPONDING TO TOO LOW OIL PRESSURE AT ** TAKE-OFF".

2. IF (OIL PRESSURE READING IS "LOW") AND *FLIGHT PHASE IS "TAKE-OFF" THEN DECISION IS "***ANNOUNCE GUIDANCE CORRESPONDING TO LOW OIL PRESSURE AT ** TAKE-OFF".

3. IF (OIL PRESSURE READING IS "HIGH") AND *FLIGHT PHASE IS "TAKE-OFF" THEN DECISION IS "***ANNOUNCE GUIDANCE CORRESPONDING TO HIGH OIL PRESSURE AT ** TAKE-OFF".

4. IF (OIL PRESSURE READING IS "TOO HIGH") AND *FLIGHT PHASE IS "TAKE-OFF" THEN DECISION IS "***ANNOUNCE GUIDANCE CORRESPONDING TO TOO HIGH OIL PRESSURE AT ** TAKE-OFF".

FIG. 17

1800

| OIL PRESSURE CONDITION: | TOO LOW | LOW | AS EXPECTED, | HIGH | TOO HIGH |
|---|---|---|---|---|---|
| FLS GUIDANCE | FURTHER ACTION DETERMINED FOR TOO LOW OIL PRESSURE CONDITION AND CURRENT FLIGHT CONDITIONS AND AFTER IMMEDIATE ACTION COMPLETION STATUS IS CONFIRMED. | FURTHER ACTION DETERMINED FOR LOW OIL PRESSURE CONDITION AND CURRENT FLIGHT CONDITIONS AND AFTER IMMEDIATE ACTION COMPLETION STATUS IS CONFIRMED. | N/A | FURTHER ACTION DETERMINED FOR HIGH OIL PRESSURE CONDITION AND CURRENT FLIGHT CONDITIONS AND AFTER IMMEDIATE ACTION COMPLETION STATUS IS CONFIRMED. | FURTHER ACTION DETERMINED FOR TOO HIGH OIL PRESSURE CONDITION AND CURRENT FLIGHT CONDITIONS AND AFTER IMMEDIATE ACTION COMPLETION STATUS IS CONFIRMED. |

FIG. 18

EP 4 667 714 A1

1900

```
                        ┌─────────┐
                        │  START  │
                        └─────────┘
```

**1910**
IDENTIFY A TARGET OIL PRESSURE VALUE

**1912** RECEIVE THE TARGET OIL PRESSURE VALUE AS AN INPUT TO THE FLS

**1914** IDENTIFY THE TARGET OIL PRESSURE VALUE AMONG A SET OF OPERATING PARAMETERS STORED IN MEMORY

**1920** RECEIVE, BY THE FLS, A MEASURED OIL PRESSURE VALUE FROM A SENSOR ASSOCIATED WITH AN ENGINE OIL SYSTEM

**1922** RECEIVING A FIRST MEASURED OIL PRESSURE VALUE AND A SECOND MEASURED OIL PRESSURE VALUE SENSOR FROM A FIRST SENSOR AND A SECOND SENSOR AMONG THE MULTIPLE SENSORS, RESPECTIVELY

**1924** RECEIVING A THIRD MEASURED OIL PRESSURE VALUE FROM A THIRD SENSOR

**1930** IN RESPONSE TO DETECTING A FAILED SENSOR, MODIFY THE RECEIVED MEASURED OIL PRESSURE VALUE

**1940** GENERATE, BY THE FLS, A NUMERICAL COMMAND BASED ON THE RECEIVED MEASURED OIL PRESSURE VALUE, A LINGUISTIC VARIABLE, MEMBERSHIP FUNCTIONS FOR EACH LINGUISTIC TERM WITHIN A SET OF LINGUISTIC TERMS FOR THE LINGUISTIC VARIABLE, AND A SET OF RULES DEFINED IN PART BY THE TARGET OIL PRESSURE VALUE

**1950** CONVERT, BY A CONTROLLER, THE NUMERICAL COMMAND TO A LINGUISTIC COMMAND FROM AMONG A SET OF LINGUISTIC COMMANDS MAPPED TO A SET OF CONTROL SIGNALS, RESPECTIVELY

**1960** OUTPUT, BY THE CONTROLLER, TO AN ACTUATOR IN THE ENGINE OIL SYSTEM, A CONTROL SIGNAL MAPPED TO THE LINGUISTIC COMMAND

**1970** EXPECTED CONDITION SATISFIED BY THE CONTROL SIGNAL OUTPUTTED TO THE ACTUATOR?

YES

NO

**1980** DETERMINE WHETHER TO SWITCH THE LINGUISTIC COMMAND TO 'INCREASE' OR 'DECREASE'

**1985** DETERMINE WHETHER TO MODIFY THE LINGUISTIC COMMAND TO 'NO CHANGE'

```
                        ┌─────────┐
                        │   END   │
                        └─────────┘
```

FIG. 19

**EUROPEAN SEARCH REPORT**

Application Number

EP 25 18 1465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 386 481 A (DONGFENG MOTOR GROUP CO LTD) 12 January 2024 (2024-01-12) | 1-4,6-9, 11,13,14 | INV.<br>F01M1/02 |
| A | * paragraphs [0001], [0009], [0014], [0067], [0087] - [0124]; claim 1; figures 1-5 * | 5,10,12, 15 | F01M1/16<br>F01M1/20 |
| A | CN 118 070 653 A (UNIV SOUTHWEST JIAOTONG) 24 May 2024 (2024-05-24)<br>* Enclosed machine translation; paragraphs [0001] - [0011]; figures 1-7 * | 1,6,11 | |
| A | CN 104 680 234 A (WUHU JIENUORUI AUTOMOTIVE ELECTRICAL SYSTEM CO LTD) 3 June 2015 (2015-06-03)<br>* Enclosed machine translation; figures 1-2 * | 1,6,11 | |
| A | CN 112 253 323 A (UNIV NANJING AERONAUTICS & ASTRONAUTICS) 22 January 2021 (2021-01-22)<br>* Enclosed machine translation; figures 1-6 * | 1,6,11 | |

TECHNICAL FIELDS SEARCHED (IPC)

F01M
F16N

The present search report has been drawn up for all claims

| Place of search | Date of completion of the search | Examiner |
|---|---|---|
| The Hague | 28 October 2025 | Ducloyer, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 1465

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2025

| Patent document cited in search report | | Publication date | Patent family member(s) | Publication date |
|---|---|---|---|---|
| CN 117386481 | A | 12-01-2024 | NONE | |
| CN 118070653 | A | 24-05-2024 | NONE | |
| CN 104680234 | A | 03-06-2015 | NONE | |
| CN 112253323 | A | 22-01-2021 | NONE | |

EPO FORM P0459

For more details about this annex : see Official Journal of the European Patent Office, No. 12/82